# EUROPEAN PATENT SPECIFICATION

(11) **EP 2 449 775 B1**
(45) Date of publication and mention of the grant of the patent: **27.05.2015**
(21) Application number: 09786474.8
(22) Date of filing: 29.06.2009
(51) Int. Cl.: G06Q 30/02, H04N 21/235, H04N 21/258, H04N 21/262, H04N 21/845, H04N 21/433, H04N 21/435

(54) **RECEIVING AND RECORDING OF CONTENT AND OF TIMING INFORMATION**
EMPFANG UND AUFZEICHNUNG VON INHALT UND ZEITPLANUNGSINFORMATIONEN
RÉCEPTION ET ENREGISTREMENT DE CONTENU ET D'INFORMATIONS DE SYNCHRONISATION

(43) Date of publication of application: 09.05.2012
(73) Proprietor: NDS Limited, Staines, Middlesex TW18 4EX (GB)
(72) Inventor: MILLAR, Keith, Haywards Heath Sussex RH16 1QU (GB)
(74) Representative: Watterson, Peer Marten John
(86) International application number: PCT/IB2009/052804
(87) International publication number: WO 2011/001207

(56) References cited:
- EP-A1- 1 089 560
- US-A1- 2004 133 909
- US-A1- 2005 262 539

## Description

The present invention relates to a method of receiving content at a user unit; and also to a method of transmitting content to a user unit.

### BACKGROUND OF THE INVENTION

When recording digital content on a recording device such a digital video recorder, the recording device typically adds a 'guard time' to the beginning and end of the recording to ensure that the content to be recorded is completely recorded (i.e. to ensure that the start and/or the end of the content is not chopped off due to the content starting early or finishing late). This is a consequence of the signaling of the content start point and/or end point either not being available or being inaccurate and unreliable. For example, signaling at the content boundaries, as provided in an Event Information Table (EIT), only has an accuracy of a few seconds at best. When the content is preceded and/or followed by an advertisement/commercial break, this often results in the recording of only part of these advertisement/commercial break(s).

EP-A-1089560 discloses a broadcast signal receiving method whereby broadcast information broadcast during a predetermined time band and received by a broadcast signal receiving apparatus is displayed in a manner interlocked with auxiliary information stored in said broadcast signal receiving apparatus in advance.

US-A-2005/0262539 discloses a closed caption tagging system that provides a mechanism for inserting tags into an audio or video television broadcast stream prior to or at the time of transmission. The tags contain command and control information that the receiver translates and acts upon. The receiver receives the broadcast stream and detects and processes the tags within the broadcast stream which is stored on a storage device that resides on the receiver. Program material from the broadcast stream is played back to the viewer from the storage device. Tags indicate the start and end points of a program segment. Program segments such as commercials are automatically replaced by the receiver with new program segments that are selected based on various criteria.

### SUMARY OF THE INVENTION

The invention provides a method of receiving and playing back content at a user unit as claimed in claim 1.

### BRIEF DESCRIPTION OF THE DRAWINGS AND THE APPENDICES

The present invention will be understood and appreciated more fully from the following detailed description, taken in conjunction with the drawings in which:
Figure 1 is a simplified pictorial illustration of broadcast system constructed and operative in accordance with embodiments of the present invention;
Figure 2 is a simplified pictorial illustration of a recording and its relationship to content and advertisement breaks in accordance with embodiments of the present invention; and

Appendix A is a copy of the "Digital Program Insertion Cueing Message for Cable" standard published by The Society of Cable Telecommunication Engineers as ANSI/SCTE 35 2007.

### DETAILED DESCRIPTION OF EMBODIMENTS

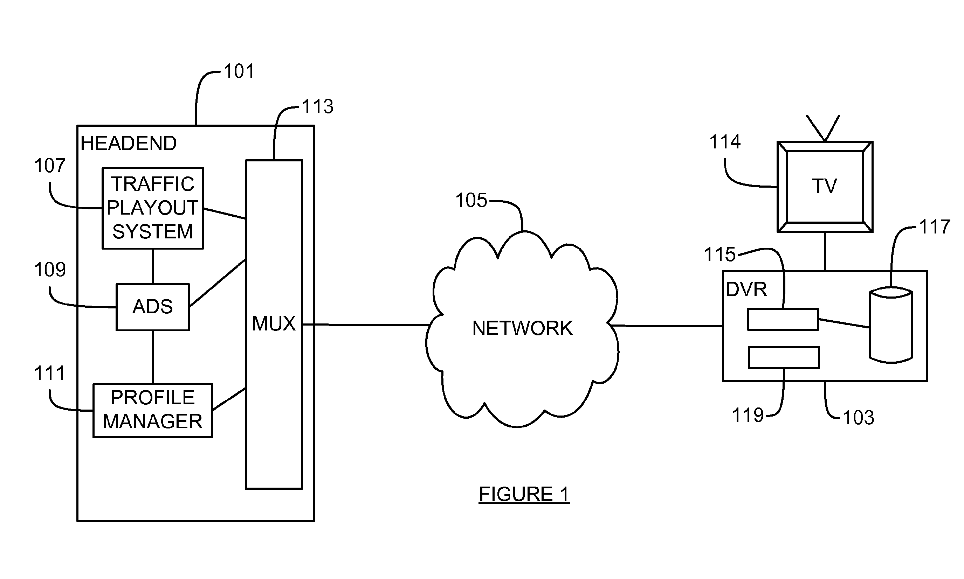

Reference is now made to Figure 1, which shows a headend 101 that communicates with a digital video recorder DVR 103 via a one-way or two-way communication network 105 that includes at least one of the following: a satellite based communication network; a cable based communication network; a terrestrial broadcast television network; a telephony based communication network; a mobile telephony based communication network; an Internet Protocol (IP) television broadcast network; and a computer based communication network. It is appreciated that in alternative embodiments, communication network 105 may, for example, be implemented by a one-way or two-way hybrid communication network, such as a combination cable-telephone network, a combination satellite-telephone network, a combination satellite-computer network, or by any other appropriate network.

Physical links in network 105 are implemented via optical links, conventional telephone links, radio frequency (RF) wired or wireless links, or any other suitable links.

It is appreciated that headend 101 may communicate with a plurality of DVRs 103 via communication network 105. Additionally, or alternatively, a plurality of headends 101 may communicate with a single DVR 103 or with a plurality of DVRs 103 via communication network 105. For simplicity of depiction and description, and without limiting the generality of the present invention, only one DVR 103 and a single headend 101 are illustrated in figure 1 and referred to below as communicating via communication network 105.

Headend 101 includes the following elements not all of which are essential to all of the embodiments described below: traffic playout system 107; advertisement decision system (ADS) 109; profile manager 111; and a multiplexer (MUX) 113. It is appreciated that headend 101 may include other elements not further described herein.

Traffic playout system 107 provides video and audio content (including programming that is separated by advertisements/commercials, and content metadata) in a format packaged for delivery via the MUX 113 to network 105.

ADS 109 performs assignment of profiles and advertisements to spots within avails, signalling of avails and profiles, and encoding of avails and profiles for delivery via the MUX 113 to network 105. (A spot is a time interval used in a broadcast for one or more advertisements/commercials; an avail is an opportunity for advertisement substitution comprising a time interval of consecutive spots; and a profile, within the context of an avail or a spot, is the conditions to be met for an advertisement substitution to be valid. Put another way, a profile (usually in the form of a profile attribute or a set of profile attributes linked by logical expressions) expresses the criteria that are used to define a target group of subscribers and determine if an advertisement substitution should take place.)

Profile manager 111 validates and stores user/device profiles for devices such as DVR 103. It also exposes an interface that enables the setting and modification of user/device profiles.

MUX 113 multiplexes video, audio and data provided by traffic playout system 107, ADS 109 and profile manager 111 and outputs multiplexed data for transmission to DVR 103 via network 105. It is appreciated that the transmissions may be transmitted either as out-of-band transmissions, such as data carousel transmissions, or as in-band transmissions, or any appropriate hybrid in-video and data carousel transmissions.

The transmissions are typically carried in a Moving Pictures Expert Group (MPEG) transport stream.

MPEG is an industry standard developed by the "Moving Pictures Expert Group" working group of the International Standards Organization (ISO) for video and audio source coding using compression and multiplexing techniques to minimize video signal bit-rate in preparation for broadcasting.

A transport stream (TS) is an MPEG multiplex with short fixed length packets carrying many programs intended for broadcast over potentially error-prone media, such as a satellite. A transport stream is a data structure defined in International Standard ISO/IEC 13818-*1* ("*Information technology* - *Generic coding of moving pictures and associated audio information: Systems"*)*.* It is the basis of the ETSI Digital Video Broadcasting (DVB), Advanced Television Systems Committee (ATSC) and ANSI Society of Cable Telecommunications Engineers (SCTE) standards. A TS may correspond to a single TV program, or multimedia stream. This type of TS is normally called a Single Programme Transport Stream (SPTS). An SPTS contains all the information required to reproduce the encoded TV channel or multimedia stream. In many cases, one or more SPTS streams are combined to form a Multiple Programme Transport Stream (MPTS). This larger aggregate also contains all the control information (Program Specific Information (PSI)) required to co-ordinate the DVB system, and any other data which is to be sent.

The multiplexed data are transmitted to DVR 103 via network 105 and received at an integrated receiver decoder (IRD) 115 in DVR 103. The IRD 115 is operable to receive, demultiplex, decode and decrypt/descramble as necessary the multiplexed data transmissions. DVR 103 also includes a high capacity storage device 117, such as a high capacity memory or disk, operatively associated with IRD 115.

DVR 103 records at least some of the transmissions received at the IRD 115 in the storage device 117 and displays recorded transmissions on television 114 at discretion of a user and at times selected by the user. It is appreciated that the recorded transmissions displayed by DVR 103 typically comprises transmissions delayed with respect to a time of broadcast of the transmissions by headend 101. Therefore, transmissions that undergo decoding, and if necessary decryption/descrambling at IRD 115, arrive either from broadcast transmissions broadcast by the headend 101, or from storage device 117 of DVR 103. The transmissions may, for example, be broadcast by headend 101 as regular scheduled transmissions or in the form of video-on-demand (VOD), near-video-on-demand (NVOD) or push-video-on-demand transmissions.

DVR 103 also stores avail schedules received at the IRD 115 in storage device 117. DVR 103 optionally also stores advertisements for use in advertisement substitution received at the IRD 115 in storage device 117.

DVR 103 also includes a processor 119, which typically includes an operating system that enables processing of the program transmissions.

It is appreciated that the elements of headend 101 and DVR 103 may be implemented in any appropriate combination of hardware and/or software. At least some of the elements comprising DVR 103 may be comprised in a single integrated circuit (IC).

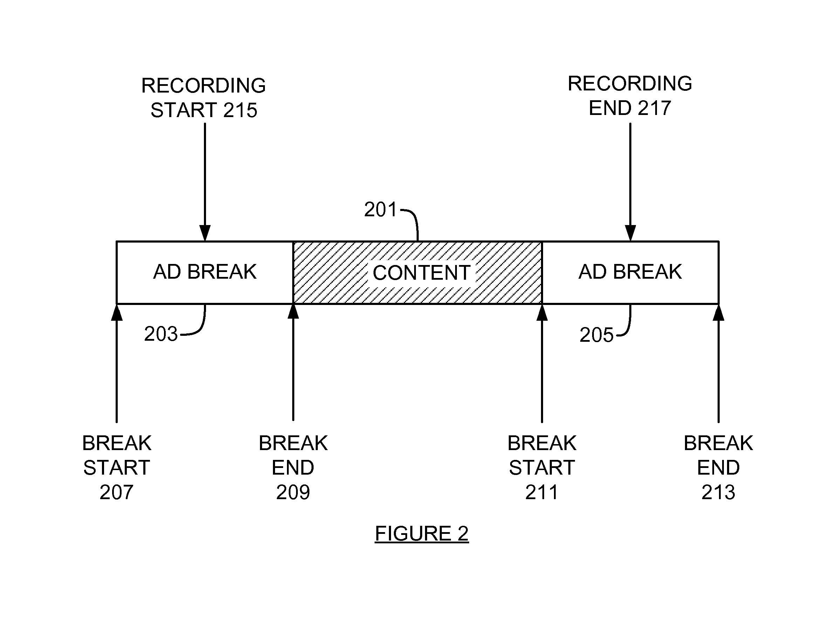

Referring now to figure 2, a typical transmission stream will now be described. Primary audio video content 201 is preceded by an advertisement break 203 (which comprises one or more advertisements) and succeeded by an advertisement break 205 (which comprises one or more advertisements). It is to be noted that there may be further advertisement breaks within primary content 201 but these are not shown for the sake of clarity.

Advertisement break 203 begins at break start point 207 and ends at break end point 209, and this is the point at which primary content 201 begins. Advertisement break 205 begins at break start point 211, and this is the point at which primary content 201 ends. Advertisement break 205 ends at break end point 213.

Signalling is provided within the headend transmissions to identify the position of the advertisement breaks within the transmission stream. ANSI/SCTE 35 2007 ("Digital Program Insertion Cueing Message for Cable*"),* included as Appendix A, defines an in-stream message mechanism used to signal splicing and insertion opportunities within an MPEG streams for the purpose of Digital Program Insertion, which includes advertisement insertion and insertion of other content types. The standard specifies a technique for carrying signalling data for notification of upcoming splice points and other timing information in an MPEG transport stream. The signalling data is typically delivered separately to the audio and video frames and therefore a common timeline is used to enable synchronisation of the audio/video stream and the signalling data stream.

Within an MPEG transport stream environment this timeline is typically provided by the PCR (Program Clock Reference), which is carried within the adaptation field of an MPEG transport stream packet (as described in the above mentioned ISO/IEC 13818-1 in Section 2.4.2.1). An elementary stream packet contains one or more frames of video and audio data. Associated with the elementary stream packet is a presentation time stamp (PTS) value, which announces the time at which the frame(s) is (are) to be presented to a user. The time is given in PCR samples.

Using the same PCR timeline mechanism, ANSI/SCTE 35 2007 signalling provides a mechanism to announce the start of an advertisement break (e.g. break start point 207/211) by announcing the PTS of the frame at which the advertisement break starts within the audio/video data stream (a splice is typically performed on a video frame boundary). As described in ANSI/SCTE 35 2007 in section 7, a splice_info_section for a splice information table is delivered on one or more PID stream(s) with the PID(s) declared in the program's PMT. The splice_info_section is delivered separately from the video and audio, using the MPEG private section syntax. The splice_info_section contains a splice_insert() command (as defined in section 7.3.3 of ANSI/SCTE 35 2007) which defines the PTS value of the splice point. DVR 103 is notified of the presence of the splice_info_section by a stream_identifier_descriptor being present within the elementary stream loop of the PMT (as described in section 6.3 of ANSI/SCTE 35 2007). It is to be noted that the PTS value announced is always greater than the PCR value currently valid within the transport stream due to a decoder delay which defines the period of time from reception of a frame to the actual presentation of a frame caused by encoded video frames being delivered out of sequence to improve encoding efficiency.

Typically the ANSI/SCTE 35 2007 signalling data includes the duration of the advertisement break (break_duration() as defined in section 7.4.2), and this can be used by DVR 103 to determine the actual PTS value at which the advertisement break finishes. Alternatively, explicit signalling of the end of advertisement break (e.g. break end point 209/213) may be provided by sending another ANSI/SCTE 35 2007 message a predetermined period of time before the end of the advertisement break.

As mentioned previously, ANSI/SCTE 35 2007 signalling data is used to signal the start of an advertisement break (e.g. break start point 207/211). ANSI/SCTE 35 2007 suggests in section 7.1 that the splice_insert() command signalling the start of an advertisement break could be delivered multiple times before the splice point, at 8, 5, 4 and 2 seconds prior to the packet containing the related splice point (i.e. prior to the start of the advertisement break.) No ANSI/SCTE 35 2007 signalling data is delivered after the advertisement break has started. Therefore if the end device tunes to the channel after the advertisement break has begun, or a recording were to commence during the advertisement break (e.g. at recording start 215), no ANSI/SCTE 35 2007 signalling data will be received.

According to embodiments of the present invention, the delivery of the ANSI/SCTE 35 2007 signalling data is extended for the entire lifetime of the advertisement break. Thus the ANSI/SCTE 35 2007 signalling data is delivered throughout the advertisement break so that if the end device tunes to the channel part way through the advertisement break this signalling data can still be received and the end device is able to determine the end of the advertisement break (splice point plus duration) and therefore the start of the main content. The ANSI/SCTE 35 2007 signalling data is also recorded and stored with the content in memory 117 (even if the advertisement has already commenced) so that if a recording commences during an advertisement break, the end device is able to determine the end of the advertisement break (splice point plus duration) and therefore the start of the main content. This is typically achieved by carouseling the same ANSI/SCTE 35 2007 signalling data at predetermined intervals (e.g. every second) throughout the advertisement break (e.g. advertisement break 203/205) on the same PID that was used to provide the ANSI/SCTE 35 2007 signalling data that signalled the start of the advertisement break (e.g. break start point 207/211).

In addition to the advertisement break signalling, for each advertisement break signalled, an avail definition may be delivered to DVR 103 that contains a sequence of rules to be evaluated at the point of playback. These rules define the behaviour of DVR 103 once the start and end of the content has been determined. These rules are typically delivered independently to the signalling since the rules could change even after the content itself has been delivered and/or after the content has been recorded. To enable the binding of rules to the signalling, a common identifier (e.g. availId) is typically provided within both the signalling and the rules. The rules may be delivered as a carousel within the delivery system; on demand at the point of playback; etc. The delivered rules are processed at the point of playback in the order in which they are defined, until one of the rules evaluates to true at which point the behaviour defined within the rule is executed. Any additional rules are not evaluated. In the present embodiment, avail definitions containing the rules are transmitted from headend 101 to DVR 103 in the form of an extensible markup language (XML) file. An example XML file showing at least a portion of an avail definition for advertisement break 203 is shown below:

```
  <?xml version= "1.0"?>
      <avail availId="458235802">
          <duration> 120</duration>
                <rule lessThanNdaysSinceRecording="5" mode="makegood">
                    <spot spotId=" 12362" duration="60">
                       <Ad duration="60">adId="3473"</Ad>
                    </spot>
                    <spot spotId=" 12363" duration="60">
                       <Ad duration="60" > adId="3534"</Ad>
                    </spot>
                </rule>
                <rule lessThanNdaysSinceRecording="20" mode=targetedAds>
                    <Profile>SportsLover</Profile>
                       <spot spotId=" 12362" duration="60">
                               <Ad duration="60"> adId="5468"</Ad>
                       </spot>
                       <spot spotId=" 12363" duration="60">
                               <Ad duration="60" > adId="32453"</Ad>
                       </spot>
                </rule>
                <rule olderThan="2009-01-14T14:55:00" mode="removeAds" />
                    <Profile>GoldTierSubscriber</Profile>
                </rule>
      </avail>
```

As can be seen in the XML code above, the avail definition is specified for a given avail identified using the availId. This availId is a common identifier that would also be provided within the signalling of advertisement break 203. A duration (typically in seconds) is specified for the avail. The avail specifies the rules which are to be evaluated at the point of playback and an operational mode to follow (behaviour to execute) if the rule evaluates to true.

Some examples of the behaviours defined by the rules delivered with the advertisement break signalling will now be described in more detail. In each of the examples that follow, it will be assumed that DVR 103 has recorded a recording and stored it in memory 117. Referring once again to figure 2, the recording starts at a recording start point 215, which falls within the middle of advertisement break 203, and ends at a recording end point 217, which falls within the middle of advertisement break 205. At the point of playing back the recording, since the advertisement break signalling has been repeatedly delivered during the lifetime of advertisement break 203 and stored with content 201 in memory 117, DVR 103 can locate the start of the primary content 201 by computing the PTS value for the end of the advertisement break (break end point 209). This is achieved by extracting the PTS value of the start of the advertisement break from memory 117, which is announced as part of the advertisement break signalling data, and adding the advertisement break duration time (also extracted from memory 229) to this PTS value. Alternatively, the PTS value for the end of the advertisement break (break end point 209) may have been explicitly announced as part of the advertisement break signalling data in which case it can be extracted from memory 117.

A rule may specify that advertisement break 203 and/or advertisement break 205 is/are not to be shown during playback of the recording. Since the PTS value for the start of primary content 201 has been determined, playback of the recording can be started from this point within the stored file. Since the start of advertisement break 205 (break start point 211) is signalled before the end of primary content 201, and stored with content 201 in memory 117, DVR 103 can use the PTS value for the start of advertisement break 205 and stop playback of the recording at this point within the stored file. Such a rule may further specify that advertisement break 203 and/or advertisement break 205 is/are not to be shown during playback of the recording if primary content 201 is more than a predetermined number of days old (which can be determined from the date on which primary content 201 was recorded/stored in memory 117) or is older than a date specified in the rule. The rule may further specify certain users who the rule is applicable to (e.g. certain levels of subscribers). By jumping to the start of the primary content when playback commences, the recording can effectively be 'trimmed' of an incomplete advertisement break to leave just the primary content.

In the example XML code above, the third rule specifies that if the current time (point of playback) is later than 2:55pm on 14 January 2009, then DVR 103 should operate in the "removeAds" mode for Gold Tier subscribers. Thus Gold Tier subscribers (who are in the 'Gold Tier' typically by virtue of the level of their subscription payments) will be able to view the primary content without viewing the advertisement break before the primary content.

As mentioned previously, DVR 103 optionally also stores advertisements, avails and profiles (for use in advertisement substitution) received at the IRD 115 in storage device 117. An operator may wish a viewer to see an advertisement break before and/or after viewing the primary content. However, in the embodiment described above, the recording starts at a recording start point 215, which falls within the middle of advertisement break 203, and ends at a recording end point 217, which falls within the middle of advertisement break 205. Thus some or all of one or more advertisements within advertisement break 203 and advertisement break 205 may not be seen by the viewer.

A rule may therefore specify that advertisement break 203 and/or advertisement break 205 be reconstructed so that the viewer is able to view advertisement break 203 and/or advertisement break 205 in its entirety. In order to implement such a rule, the contents of the avails that formed advertisement break 203 and advertisement break 205, and optionally the advertisements themselves, are delivered to DVR 103 along with the advertisement break signalling and stored in memory 117. A play list is generated that contains the primary content (starting from the PTS value for the end of advertisement break 203 and ending with the PTS value for the start of advertisement break 205 (determined according to the method described above) preceded by the advertisements that formed advertisement break 203 and/or followed by the advertisements that formed advertisement break 205. Thus the recorded incomplete advertisement breaks can be 'made good', or put another way, the recorded incomplete advertisement breaks can be reconstructed by substituting complete versions of the advertisement breaks, so that a viewer viewing the recording is able to view the complete advertisement break 203 and/or the complete advertisement break 205 even though the original recording did not include complete versions of advertisement break 203 and/or advertisement break 205. The advertisement(s) to be used in the reconstruction may be pre-stored in storage device 117 and/or may be fetched.

In the XML code above, the first rule specifies that the "makegood" behaviour, as described above, be executed if less than five days have elapsed since the recording. Two spots (having spotIds of 12362 and 12363) of 120s duration are specified. The spot with spotId 12362 specifies an advertisement of 60s duration having an adId of 3473. The spot with spotId 12363 specifies an advertisement of 60s duration having an adId of 3534. These spots and advertisements define the original broadcast advertisements that comprised advertisement break 203.

Such a rule could also specify that only certain advertisements that formed advertisement break 203 and advertisement break 205 be used in the reconstruction. For example, advertisements not recorded at all (i.e. those advertisements that aired in their entirety in advertisement break 203 before recording start point 215 (and/or those advertisements that aired in their entirety in advertisement break 205 after recording end point 217)) may be omitted from the reconstruction so that only the advertisement that was incomplete by starting the recording at recording start point 215 and subsequent advertisements (and/or the advertisement that was incomplete by stopping the recording at recording end point 217 and preceding advertisements), are reconstructed.

Instead of reconstructing the recorded incomplete advertisement break using the contents the contents of the avails that formed advertisement break 203 and advertisement break 205, a rule may specify that DVR 103 should construct an advertisement break to precede and/or follow primary content based on the profiles (advertisement substitution rules) stored in memory 117. In this way, an operator can use advertisement substitution to target advertisements at particular viewers. Methods of targeted advertisement substitution will be apparent to someone skilled in the art. The advertisement(s) to be used in the substitution may be pre-stored in storage device 117 and/or may be fetched.

In the XML code above, the second rule specifies that the "targetedAds" behaviour, as described above, be executed if less than twenty days have elapsed since the recording. Two spots (having spotIds of 12362 and 12363) of 120s duration are specified. The spot with spotId 12362 specifies an advertisement of 60s duration having an adId of 5468. The spot with spotId 12363 specifies an advertisement of 60s duration having an adId of 32453. It will be remembered that a profile expresses the criterion/criteria that is/are used to define a target group of subscribers and determine if an advertisement substitution should take place. The profile takes the form of a profile attribute (or a set of attributes linked by logical expressions). In this example, the rule specifies a profile of "SportsLover" (so that the substitution would only take place for a subscriber who enjoyed watching sports programming).

Instead of reconstructing the recorded incomplete advertisement break using the contents of the avails that formed advertisement break 203 and advertisement break 205, a rule may specify that DVR 103 should use some other content to precede and/or follow the primary content. Examples of other content may include content trailers, promotions, infomercials, broadcaster messages.

Another rule may specify that during playback of advertisement break 203 and/or advertisement break 205 (whether or not either or both has been reconstructed, with or without targeted advertisements) trick mode navigation (i.e. the ability for the viewer to view advertisements in a fast-forward or a fast-backward mode) is prohibited. Currently, trick mode prevention only works if the end user device is tuned to the channel broadcasting the advertisement when the advertisement commenced because the signalling to prevent trick mode operation is typically included as part of the rules associated with the advertisement break signalling. Thus, a rule that accompanied the advertisement break signalling throughout the duration of the advertisement would overcome this deficiency and therefore trick modes could be prevented even if a viewer tunes to a channel during an advertisement.

It will be apparent from the foregoing description that many modifications or variations may be made to the above described embodiments without departing from the invention. Such modifications and variations include:
Although the above embodiments were described in relation to advertisements and advertisement breaks, the processes described are equally applicable to other forms of content sub-items or interstitial content.
Although the above described embodiments were described using ANSI/SCTE 35 2007 signalling data, other signalling mechanisms that enable the synchronisation of data with a known timeline (e.g. MPEG PCR) are equally applicable. See, for example, ETSI TS 102 823 *(Digital Video Broadcasting (DVB); Specification for the carriage of synchronized auxiliary data in DVB transport streams*"). Moreover, the signalling mechanism described above is not limited to MPEG transport streams. In the case of content delivery over an internet protocol (IP) network, the Real-time Transport Protocol (RTP) along with the Real-time Transport Control Protocol (RTCP) (published by the Internet Engineering Task Force as Request for Comment (RFC) 2550) provides a similar mechanism for the synchronization of data with one or more components.

It is to be noted that the advertisement substitution described above can take place in either the transport (i.e. encoded) domain or in the presentation (i.e. unencoded) domain. In some embodiments, the term "playback" therefore includes the process of decoding rather than simply passing the decoded output of IRD 115 to television 114.

In the above described embodiments, the avail definitions were described as being transmitted from headend 101 to DVR 103 in the form of an extensible markup language (XML) file. In alternative embodiments, a specific binary encoding of the avail definitions could be transmitted instead in order to reduce the bandwidth requirements and to increase the speed at which the data can be parsed.

In the above described arrangements, the delivery of the ANSI/SCTE 35 2007 signalling data is extended for the entire lifetime of the advertisement break. In embodiments, the delivery of the signalling data is further extended for a predetermined period into a content item following the advertisement break. For example, the signalling data for advertisement break 203 may be delivered one or more times after the splice point. This is useful in a situation where recording start point 215 occurred close to break end point 209 but after the last carouselled message of advertisement break 203 that carried the advertisement break signalling data.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product; on a tangible medium; or as a signal interpretable by an appropriate computer.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined only by the claims which follow.

### APPENDIX A

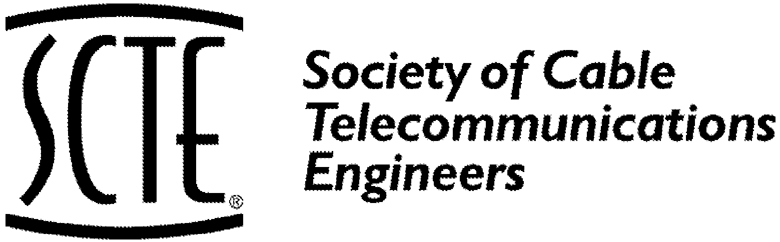

### ENGINEERING COMMITTEE Digital Video Subcommittee

### AMERICAN NATIONAL STANDARD

### ANSI/SCTE 35 2007

### Digital Program Insertion Cueing Message for Cable

### NOTICE

The Society of Cable Telecommunications Engineers (SCTE) Standards are intended to serve the public interest by providing specifications, test methods and procedures that promote uniformity of product, interchangeability and ultimately the long term reliability of broadband communications facilities. These documents shall not in any way preclude any member or non-member of SCTE from manufacturing or selling products not conforming to such documents, nor shall the existence of such standards preclude their voluntary use by those other than SCTE members, whether used domestically or internationally.

SCTE assumes no obligations or liability whatsoever to any party who may adopt the Standards. Such adopting party assumes all risks associated with adoption of these Standards, and accepts full responsibility for any damage and/or claims arising from the adoption of such Standards.

Attention is called to the possibility that implementation of this standard may require the use of subject matter covered by patent rights. By publication of this standard, no position is taken with respect to the existence or validity of any patent rights in connection therewith. SCTE shall not be responsible for identifying patents for which a license may be required or for conducting inquiries into the legal validity or scope of those patents that are brought to its attention.

Patent holders who believe that they hold patents which are essential to the implementation of this standard have been requested to provide information about those patents and any related licensing terms and conditions. Any such declarations made before or after publication of this document are available on the SCTE web site at http://www.scte.org.

### Contents

***1 Scope*................................................................................................................................................... *5***
***2 References*.......................................................................................................................................... *5***
   **2.1 Normative references................................................................................................................ 5**
   **2.2 Informative References ............................................................................................................ 6**
***3 Definition of terms............................................................................................................................. 6***
***4 Abbreviations*...................................................................................................................................... *9***
***5 Introduction*...................................................................................................................................... *10***
   **5.1 Splice points (Informative)..................................................................................................... 10**
   **5.2 Program Splice Points (Informative) .................................................................................... 10**
   **5.3 Splice events (Informative)..................................................................................................... 11**
   **5.4 Content Storage Considerations (Informative)................................................................... 11**
   **5.5 PID selection............................................................................................................................ 12**
      5.5.1 PID Selection (Normative) ...................................................................................................... 12
      5.5.2 PID Selection (Informative)..................................................................................................... 12
   **5.6 Message flow (Informative).................................................................................................... 13**
***6 PMT Descriptors .............................................................................................................................. 13***
   **6.1 Registration Descriptor .......................................................................................................... 13**
      6.1.1 Semantic definition of fields in Registration Descriptor ......................................................... 14
   **6.2 Cue Identifier Descriptor....................................................................................................... 14**
      6.2.1 Semantic definition of fields in Cue Identifier Descriptor....................................................... 15
      6.2.2 Description of cue_stream_type usage .................................................................................... 15
   **6.3 Stream Identifier Descriptor.................................................................................................. 16**
      6.3.1 Semantic definition of fields in Stream Identifier Descriptor.................................................. 16
**7 Splice Information Table................................................................................................................. *16***
   **7.1 Overview .................................................................................................................................. 16**
      7.1.1 Time Base Discontinuities ....................................................................................................... 18
   **7.2 Splice Info Section................................................................................................................... 18**
      7.2.1 Semantic definition of fields in splice_info_section()............................................................. 19
   **7.3 Splice Commands.................................................................................................................... 21**
      7.3.1 splice_null() ............................................................................................................................. 21
      7.3.2 splice_schedule()...................................................................................................................... 21
      7.3.3 splice_insert() ........................................................................................................................... 23
      7.3.4 time_signal() ............................................................................................................................ 25
      7.3.5 bandwidth_reservation() .......................................................................................................... 26
      7.3.6 private_command() .................................................................................................................. 26
   **7.4 Time.......................................................................................................................................... 27**
      7.4.1 splice_time() ............................................................................................................................ 27
      7.4.2 break_duration() ...................................................................................................................... 27
   **7.5 Constraints............................................................................................................................... 28**
      7.5.1 Constraints on splice_info_section()........................................................................................ 28
      7.5.2 Constraints on the interpretation of time ................................................................................. 29
***8 Splice Descriptors............................................................................................................................. 31***
   **8.1 Overview .................................................................................................................................. 31**
   **8.2 Splice Descriptor..................................................................................................................... 31**
      8.2.1 Semantic definition of fields in splice_descriptor() ................................................................. 32
   **8.3 Specific Splice Descriptors ..................................................................................................... 32**
      8.3.1 avail_descriptor() ..................................................................................................................... 32
      8.3.2 DTMF_descriptor().................................................................................................................. 33
      8.3.3 segmentation_descriptor()........................................................................................................ 34
***9 Encryption........................................................................................................................................40***
   **9.1 Overview .................................................................................................................................. 40**
   **9.2 Fixed Key Encryption............................................................................................................. 40**
   **9.3 Encryption Algorithms........................................................................................................... 40**
      9.3.1 DES - ECB mode .................................................................................................................... 41
      9.3.2 DES - CBC mode .................................................................................................................... 41
      9.3.3 Triple DES EDE3 - ECB mode............................................................................................... 41
      9.3.4 User Private Algorithms .......................................................................................................... 41

### List Of Tables

| | |
|---|---|
| Table 6-1. registration_descriptor() | 14 |
| Table 6-2. cue_identifier_descriptor() | 14 |
| Table 6-3. cue_stream type Values | 15 |
| Table 6-4. stream_identifier_descriptor() | 16 |
| Table 7-1. splice_info_section() | 18 |
| Table 7-2. splice_command type Values | 20 |
| Table 7-3. splice_null() | 21 |
| Table 7-4. splice_schedule() | 22 |
| Table 7-5. splice_insert() | 24 |
| Table 7-6. time_signal() | 26 |
| Table 7-7. bandwidth_reservation() | 26 |
| Table 7-8. private_command() | 26 |
| Table 7-9. splice_time() | 27 |
| Table 7-10. break_duration() | 28 |
| Table 8-1. Splice Descriptor Tags | 31 |
| Table 8-2. splice_descriptor() | 31 |
| Table 8-3. avail_descriptor() | 32 |
| Table 8-4. DTMF_descriptor() | 33 |
| Table 8-5. segmentation descriptor() | 34 |
| Table 8-6. segmentation_upid_type | 36 |
| Table 8-7. segmentation_type_id | 37 |
| Table 9-1. Encryption Algorithm | 41 |

### Digital Program Insertion Cueing Message for Cable

### 1 Scope

This standard supports the splicing of MPEG-2 streams for the purpose of Digital Program Insertion, which includes advertisement insertion and insertion of other content types. An in-stream messaging mechanism is defined to signal splicing and insertion opportunities and it is not intended to ensure seamless splicing. As such, this recommendation does not specify the splicing method used or constraints applied to the streams being spliced, nor does it address constraints placed on splicing devices. This standard also supports accurate signaling of events in the stream.

A fully compliant MPEG-2 transport stream (either Multi Program Transport Stream or Single Program Transport Stream) is assumed. No further constraints beyond the inclusion of the defined cueing messages are placed upon the stream.

This standard specifies a technique for carrying notification of upcoming Splice Points and other timing information in the transport stream. A splice information table is defined for notifying downstream devices of splice events, such as a network break or return from a network break. The splice information table, which pertains to a given program, is carried in one or more PID(s) referred to by that program's Program Map Table (PMT). In this way, splice event notification can pass through most transport stream remultiplexers without need for special processing.

### 2 References

### 2.1 Normative references

The following standards contain provisions that, through reference in this text, constitute provisions of this standard. At the time of publication, the editions indicated were valid. All standards are subject to revision, and parties to agreements based on this standard are encouraged to investigate the possibility of applying the most recent edition of the standards indicated below.

ISO 15706:2002 - Information and Documentation - International Standard Audiovisual Number (ISAN)

ISO 15706-2:200x (In Process) - Information and Documentation - International Standard Audiovisual Number (V-ISAN)

ITU-T Recommendation H.222.0 / ISO/IEC 13818-1 (2000), Information Technology ---- Generic Coding of Moving Pictures and Associated Audio Information: Systems

MD-SP-ADI2.0-AS-I03-070105 - Metadata Specifications - ADI 2.0 Specification Asset Structure

SMPTE 330M-2004 - SMPTE Standard for Television - Unique Material Identifier

FIPS PUB 46-3, 1999 October 25, Data Encryption Standard

FIPS PUB 81, 1980 December 2, DES Modes of Operation

### 2.2 Informative References

Advertising Digital Identification, LLC - http://www.ad-id.org/

ISAN (International Standard Audiovisual Number) website - http://www.isan.org

ITU-T Recommendation H.262 / ISO/IEC 13818-2 (2000), Information Technology---- Generic Coding of Moving Pictures and Associated Audio Information: video

ISO/IEC 13818-4: 2004 - Information Technology - Generic coding of moving pictures and associated audio information - Part 4: Conformance testing

SCTE 30 2006 - Digital Program Insertion Splicing API

SCTE 67 2006 - Digital Program Insertion Cueing Message for Cable - Interpretation for SCTE 35

SCTE 118-2 2006 - Program-Specific Ad Insertion - Content Provider to Traffic Communication Applications Data Model

SMPTE Registration Authority, LLC - http://www.smpte-ra.org/

SMPTE 312M - 2001 - SMPTE STANDARD for Television - Splice Points for MPEG-2 Transport Streams

### 3 Definition of terms

Throughout this standard the terms below have specific meanings. Because some of the terms that are defined in ISO/IEC 13818 have very specific technical meanings, the reader is referred to the original source for their definition. For terms defined by this standard, brief definitions are given below.

**Access Unit:** A coded representation of a presentation unit (see ITU-T H.262 / ISO/IEC 13818-1 2.1.1).

**Advertisement** (also called "ad"): an inducement to buy or patronize. As used in the cable industry, usually with a duration under 2 minutes (sometimes called "short-form" content).

**Analog Cue Tone:** in an analog system, a signal that is usually either a sequence of DTMF tones or a contact closure that denotes to ad insertion equipment that an advertisement avail is about to begin or end.

**Avail:** time space provided to cable operators by cable programming services during a program for use by the CATV operator; the time is usually sold to local advertisers or used for channel self promotion.

**Break:** avail or an actual insertion in progress.

**Chapter:** a short section of a longer program, usually situated to permit a viewer to easily locate a scene or section of the program.

**Component Splice Mode:** a mode of the cueing message whereby the program splice_flag is set to '0' and indicates that each PID/component that is intended to be spliced will be listed separately by the syntax that follows. Components not listed in the message are not to be spliced.

**Content:** Generic term for television material, either advertisements or programs.

**Cueing Message:** see message.

**Event:** a splice event or a viewing event.

**In Point:** a point in the stream, suitable for entry, that lies on an elementary presentation unit boundary. An In Point is actually between two presentation units rather than being a presentation unit itself.

**In Stream Device:** A device that receives the transport stream directly and is able to derive timing information directly from the transport stream.

**Message:** in the context of this document a message is the contents of any splice_info_section.

**Multi Program Transport Stream:** A transport stream with multiple programs.

**Out of Stream Device:** A device that receives the cue message from an in stream device over a separate connection from the transport stream. An out of stream device does not receive or pass the transport stream directly.

**Out Point:** a point in the stream, suitable for exit, that lies on an elementary presentation unit boundary. An Out Point is actually between two presentation units rather than being a presentation unit itself.

**payload_unit_start_indicator:** a bit in the transport packet header that signals, among other things, that a section begins in the payload that follows (see ITU-T H.222.0 / ISO/IEC 13818-1).

**PID:** Packet identifier; a unique 13-bit value used to identify the type of data stored in the packet payload (see ITU-T H.222.0 / ISO/IEC 13818-1).

**PID stream:** All the packets with the same PID within a transport stream.

**pointer_field:** the first byte of a transport packet payload, required when a section begins in that packet (see ITU-T H.222.0 / ISO/IEC 13818-1).

**Presentation Time:** the time that a presentation unit is presented in the system target decoder (see ITU-T H.222.0 / ISO/IEC 13818-1).

**Presentation Unit:** A decoded Audio Access Unit or a decoded picture (see ITU-T H.262 / ISO/IEC 13818-1 2.1.40).

**Program:** A collection of video, audio, and data PID streams that share a common program number within an MPTS (see ITU-T H.222.0 / ISO/IEC 13818-1). As used in the context of the segmentation descriptor, a performance or informative presentation broadcast on television, typically with a duration over 5 minutes (sometimes called "long-form" content).

**Program In Point:** a group of PID stream In Points that correspond in presentation time.

**Program Out Point:** a group of PID stream Out Points that correspond in presentation time.

**Program Splice Mode:** a mode of the cueing message whereby the program_splice_flag is set to '1' and indicates that the message refers to a Program Splice Point and that all PIDs/components of the program are to be spliced.

**Program Splice Point:** a Program In Point or a Program Out Point.

**Receiving Device:** A device that receives or interprets sections conforming to this standard. Examples of these devices include splicers, ad servers, segmenters and satellite receivers.

**Registration Descriptor:** carried in the PMT of a program to indicate that, when signaling splice events, splice_info_sections shall be carried in a PID stream within this program. The presence of the Registration Descriptor signifies a program's compliance with this standard.

**reserved:** The term "reserved", when used in the clauses defining the coded bit stream, indicates that the value may be used in the future for extensions to the standard. Unless otherwise specified, all reserved bits shall be set to '1' and this field shall be ignored by receiving equipment.

**Segment:** either a *Program,* a *Chapter,* a *Provider Advertisement,* a *Distributor Advertisement,* or an *Unscheduled Event* as listed in Table 8-7, segmentation_type_id.

**Single Program Transport Stream:** A transport stream containing a single MPEG program.

**Splice Event:** an opportunity to splice one or more PID streams.

**Splice Immediate Mode:** a mode of the cueing message whereby the splicing device shall choose the nearest opportunity in the stream, relative to the splice info_table, to splice. When not in this mode, the message gives a "pts time" that, when modified by pts_adjustment, gives a presentation time for the intended splicing moment.

**Splice Point:** a point in a PID stream that is either an Out Point or an In Point.

**Viewing Event:** a television program or a span of compressed material within a service; as opposed to a splice event, which is a point in time.

### 4 Abbreviations

This document uses the following abbreviations:
**ADI:** Asset Distribution Interface
**Ad-ID:** Advertisement Identifier
**ATSC:** Advanced Television Systems Committee.
**bslbf:** Bit string, left bit first, where left is the order in which bit strings are written.
**DVB:** Digital Video Broadcast
**FIPS:** Federal Information Processing Standard
**ISAN:** International Standard Audiovisual Number (see ISO 15706)
**ISCI:** Industry Standard Commercial Identifier
**MPTS:** a Multi Program Transport Stream.
**PMT:** Program Map Table (see ITU-T H.222.0 / ISO/IEC 13818-1).
**PTS:** Presentation Time Stamp (see ITU-T H.222.0 / ISO/IEC 13818-1).
**rpchof:** Remainder polynomial coefficients, highest order first.
**SPTS:** a Single Program Transport Stream.
**STC:** System Time Clock
**TI:** Turner Identifier
**TID:** Tribune Identifier
**uimsbf:** Unsigned integer, most significant bit first.
**UMID:** Unique Material Identifier
**V-ISAN:** Version-ISAN (core ISAN number plus a version number) (see ISO 15706-2)

### 5 Introduction

### 5.1 Splice points (Informative)

To enable the splicing of compressed bit streams, this standard defines Splice Points. Splice Points in an MPEG-2 transport stream provide opportunities to switch elementary streams from one source to another. They indicate a place to switch or a place in the bit stream where a switch can be made. Splicing at such splice points may or may not result in good visual and audio quality. That is determined by the performance of the splicing device.

Transport streams are created by multiplexing PID streams. In this standard, two types of Splice Points for PID streams are defined: Out Points and In Points. In Points are places in the bit streams where it is acceptable to enter, from a splicing standpoint. Out Points are places where it is acceptable to exit the bit stream. The grouping of In Points of individual PID streams into Program In Points in order to enable the switching of entire programs (video with audio) is defined. Program Out Points for exiting a program are also defined.

Out Points and In Points are imaginary points in the bit stream located between two elementary stream presentation units. Out Points and In Points are not necessarily transport packet aligned and are not necessarily PES packet aligned. An Out Point and an In Point may be co-located; that is, a single presentation unit boundary may serve as both a safe place to leave a bit stream and a safe place to enter it.

The output of a simple switching operation will contain access unit data from one stream up until its Out Point followed by data from another stream starting with the first access unit following an In Point. More complex splicing operations may exist whereby data prior to an Out Point or data after an In Point are modified by a splicing device. Splicing devices may also insert data between one stream's Out Point and the other stream's In Point. The behavior of splicing devices will not be specified or constrained in any way by this standard.

### 5.2 Program Splice Points (Informative)

Program In Points and Program Out Points are sets of PID stream In Points or Out Points that correspond in presentation time.

Although Splice Points in a Program Splice Point correspond in presentation time, they do not usually appear near each other in the transport stream. Because compressed video takes much longer to decode than audio, the audio Splice Points may lag the video Splice Points by as much as hundreds of milliseconds and by an amount that can vary during a program.

This standard defines two ways of signaling which splice points within a program are to be spliced. A program_splice_flag, when true, denotes that the Program Splice Mode is active and that all PIDs of a program may be spliced (the splice information table PID is an exception; splicing or passage of these messages is beyond the scope of this standard). A program_splice_flag, when false, indicates that the Component Splice Mode is active and that the message will specify unambiguously which PIDs are to be spliced and may give a unique splice time for each. This is required to direct the splicing device to splice or not to splice various unspecified data types as well as video and audio.

While this standard allows for a unique splice time to be given for each component of a program, it is expected that most Component Splice Mode messages will utilize one splice time (a default splice time) for all components as described in section 7. The facility for optionally specifying a separate splice time for each component is intended to be used when one or more components differ significantly in their start or stop time relative to other components within the same message. An example would be a downloaded applet that must arrive at a set-top box several seconds prior to an advertisement.

### 5.3 Splice events (Informative)

This standard provides a method for in-band signaling of splice events using splice commands to downstream splicing equipment. Signaling a splice event identifies which Splice Point within a stream to use for a splice. A splicing device may choose to act or not act upon a signaled event (a signaled event should be interpreted as an opportunity to splice; not a command). A splice information table carries the notice of splice event opportunities. Each signaled splice event is analogous to an analog cue tone. The splice information table incorporates the functionality of cue tones and extends it to enable the scheduling of splice events in advance.

This standard establishes that the splice information table is carried on a per-program basis in one or more PID stream(s) with a designated stream_type. The program's splice information PID(s) are designated in the program's program map table (PMT). In this way, the splice information table is switched with the program as it goes through remultiplexing operations. A common stream_type identifies all PID streams that carry splice information tables. Remultiplexers or splicers may use this stream_type field to drop splice information prior to sending the transport stream to the end-user device.

The cue injection equipment may send messages at intervals that do not indicate a splice point to be used as heartbeat messages which help insure the proper operation of the system. This could be performed by periodically issuing splice_null() messages or by sending encrypted splice insert messages generated with a key that is not distributed. Since cues are currently sent twice per hour on a typical network, an average interval of 5 minutes would be a reasonable interval. If a message was not received in a 10 minute interval, a receiving device could alarm an operator to a possible system malfunction (such behavior would be implementer dependent).

### 5.4 Content Storage Considerations (Informative)

The requirements for identifier uniqueness are written expecting the content to be playing in real time. If the content is stored, then the playback of the content does not place requirements upon the playback equipment to alter any of these identifiers (such as splice_event_id or segmentation_event_id). Downstream equipment parsing the identifiers should keep this in mind and, if applicable, rely upon other confirming information before reacting adversely to a seeming violation of the identifier uniqueness requirements of this standard.

This standard provides optional tools to assist with segmenting content into shorter sections which may be either chapters or advertisements. See Section 8.3.3.

### 5.5 PID selection

### 5.5.1 PID Selection (Normative)

Splice Information can be carried in multiple PIDs. The maximum number of PIDs that can carry splice information shall not exceed 8. These PIDs can be either in the clear (where the transport scrambling_control bits are set to '00') or scrambled by a CA system. Each cue message PID may include the cue_identifier_descriptor defined in section 6.2 to describe the splice commands included in the PID. When multiple PIDs are used to carry splice information, the first cue message PID in the Program Map Table shall only contain the splice command types 0x00 (splice_null), 0x04 (splice_schedule) and 0x05 (splice_insert). In addition, the splice_event_id shall be unique in all splice information PIDs within the program.

### 5.5.2 PID Selection (Informative)

While the use of multiple cue message PIDs is an allowed practice, it should be noted that not all equipment may respond in the same manner to a stream that contains multiple cue message PIDs. Some equipment may limit the number of PIDs that the equipment can pass or receive. If a system utilizes multiple PIDs through various devices with the intention of reaching the set-top, it is suggested that thorough end-end testing be performed.

In many systems, the delivery of PIDs that carry splice information beyond the ad insertion equipment in the head-end is not desired. In these systems, the splicing or multiplexing device will drop any or all of these messages (PIDs) so they will not be delivered to the set-top. In other systems it may selectively pass certain PIDs to the set top to enable set-top functionality. A third possibility is that the splicing or multiplexing device will aggregate the multiple PIDs that carry splice information into a single PID to handle downstream, set-top, issues with multiple PIDs. The action of ignoring or passing the message is recommended to be a user provisioned item, with a suitable default behavior chosen by the implementer.

The default operation if a splicing or multiplexing device receives a PID based on this specification with the scrambling bits set in the header should be to drop that PID and not pass it through to the output. This ideally should be a user provisioned operation, as in some instances this PID may be descrambled by a downstream device.

The delivery of messages outside of the receive location to the customer may be based on business agreements. An example would be that one programmer wants the cue messages passed to set-tops to enable a targeted advertising method while a different programmer insists that the messages be dropped to insure that a commercial killer may not utilize the messages.

When multiple splicing PIDs are identified in the PMT, the splicing device should process all of these PIDs. If the cue_identifier_descriptor is utilized, the splicing or multiplexing device may use that information to be more selective of the PIDs on which it will act.

Some possible reasons for utilizing multiple PIDs for this message include selective delivery of cue messages for different tiers of advertising or for separating cue messages from segmentation messages. While one possible method of handling these issues is to use the encryption methods built in to this standard, many delivery mechanisms can support conditional delivery by PID in a secure fashion. The delivery equipment (Satellite transmitter/receiver, remultiplexer) may PID filter the stream to only allow one or a small number of the PIDs to be passed in-stream. This method may be used to create multiple programs in the feed based on entitlement. The decision to use one or more PIDs will be based on the security required and the CA hardware available on the system.

### 5.6 Message flow (Informative)

The messages described in this document can originate from multiple sources. They are designed to be sent in-stream to downstream devices. The downstream devices may act on the messages or send them to a device that is not in-stream to act upon them. An example would be a splicer communicating via SCTE 30 protocol to an ad server. The in-stream devices could pass the messages to the next device in the transmission chain, or they could, optionally, drop the messages. Implementers are urged to make these decisions user provisioned, rather than arbitrarily hard-coded.

Any device that restamps pcr/pts/dts and that passes these cue messages to a downstream device should modify the pts_time field or the pts_adjustment field in the message in all PIDs conforming to this standard. Modifying the pts_adjustment field is preferred because the restamping device will not have to be knowledgeable of the pts_time field that may occur in multiple commands (and possibly in future commands).

The bandwidth_reservation() message is intended as a message used on a closed path from a satellite origination system (encoder) to a receiver. It is also intended that this message will be dropped (replaced by a NULL packet) by the receiver, but this is not required. Should this message reach an in-stream device (e.g. a splicer) the message should not be forwarded to an out-of-stream device (e.g. Ad Server) and can either be ignored or passed by an in-stream device. The action of ignoring or passing the message is recommended to be a user provisioned item, with a suitable default behavior chosen by the implementer.

### 6 PMT Descriptors

### 6.1 Registration Descriptor

The registration descriptor (ITU-T H.222.0 **/** ISO/IEC 13818-1, table 2-46 -- Registration Descriptor, clause 2.6.8) is defined to identify unambiguously the programs that comply with this standard. The registration descriptor shall be carried in the program_info loop of the PMT for each program that complies with this standard. It must reside in all PMTs of all complying programs within a multiplex. The presence of the registration descriptor also indicates that, when signaling splice events, splice_info_sections shall be carried in one or more PID stream(s) within this program.

Presence of this registration descriptor in the PMT signals the following:
1. The program elements do not include the splice information table defined by SMPTE 312M.
2. The only descriptors that can be present in the ES_descriptor_loop of the PMT for the PID(s) that carry the splice_information_table are those that are defined in this specification or user private descriptors.

Note that this descriptor applies to the indicated program and not to the entire multiplex. The content of the registration descriptor is specified in Table 6-1 and below:

**Table 6-1. registration_descriptor()**

| **Syntax** | **Bits** | **Mnemonic** |
|---|---|---|
| registration_descriptor() { | | |
| **descriptor_tag** | **8** | **uimsbf** |
| **descriptor_length** | **8** | **uimsbf** |
| **SCTE_splice_format_identifier** | **32** | **uimsbf** |
| } | | |

### 6.1.1 Semantic definition of fields in Registration Descriptor

**descriptor_tag -** The descriptor_tag is an 8-bit field that identifies each descriptor. For registration purposes, this field shall be set to 0x05.

**descriptor_length -** The descriptor_length is an 8-bit field specifying the number of bytes of the descriptor immediately following descriptor_length field. For this registration descriptor, descriptor_length shall be set to 0x04.

**SCTE_splice_format_identifier -** SCTE has assigned a value of 0x43554549 (ASCII "CUEI") to this 4-byte field to identify the program (within a multiplex) in which it is carried as complying with this standard.

### 6.2 Cue Identifier Descriptor

The cue_identifier_descriptor may be used in the PMT to label PIDs that carry splice commands so that they can be differentiated as to the type or level of splice commands they carry. The cue_identifier_descriptor, when present, shall be located in the elementary descriptor loop. If the cue_identifier_descriptor is not utilized, the stream may carry any valid command in this specification.

**Table 6-2. cue_identifier_descriptor()**

| **Syntax** | **Bits** | **Mnemonic** |
|---|---|---|
| cue_identifier_descriptor() { | | |
| **descriptor_tag** | **8** | **uimsbf** |
| **descriptor_length** | **8** | **uimsbf** |
| **cue_stream_type** | **8** | **uimsbf** |
| } | | |

### 6.2.1 Semantic definition of fields in Cue Identifier Descriptor

**descriptor_tag -** The descriptor_tag is an 8-bit field that identifies each descriptor. For cue_identifier_descriptor, this field shall be set to 0x8A.

**descriptor_length -** The descriptor_length in an 8-bit field specifying the number of bytes of the descriptor immediately following descriptor_length field. For this descriptor, descriptor_length shall be set to 0x01.

**cue_stream_type -** This 8-bit field is defined in the following table.

**Table 6-3. cue_stream_type Values**

| **cue_stream_type** | **PID usage** |
|---|---|
| 0x00 | splice_insert, splice_null, splice_schedule |
| 0x01 | All Commands |
| 0x02 | Segmentation |
| 0x03 | Tiered Splicing |
| 0x04 | Tiered Segmentation |
| 0x05-0x7f | Reserved |
| 0x80 - 0xff | User Defined |

### 6.2.2 Description of cue_stream_type usage

**0x00 - splice_insert, splice_null, splice_schedule -** Only these cue messages are allowed in this PID stream. There shall be a maximum of one PID identified with this cue_stream_type. If this PID exists, it shall be the first stream complying with this standard in the PMT elementary stream loop.

**0x01 - All Commands -** Default if this descriptor is not present. All messages can be used in this PID.

**0x02 - Segmentation -** This PID carries the time_signal command and the segmentation descriptor. It may also carry all other commands if needed for the application, but the primary purpose is to transmit content segmentation information.

**0x03 - Tiered Splicing -** Tiered Splicing refers to an insertion system where the operator provides different inserted program possibilities in a given avail for different customers. The physical and logical implementation may be done in several different manners, some of them outside the scope of this standard.

**0x04 - Tiered Segmentation -** Tiered Segmentation refers to a system where the operator provides different program segmentation possibilities for different customers. The physical and logical implementation may be done in several different manners, some of them outside the scope of this standard.

**0x05-0x7F -** Reserved for future extensions to this standard.

**0x80-0xFF -** User defined range.

### 6.3 Stream Identifier Descriptor

The stream identifier descriptor may be used in the PMT to label component streams of a service so that they can be differentiated. The stream identifier descriptor shall be located in the elementary descriptor loop following the relevant ES _info_length field. The stream identifier descriptor shall be used if either the program_splice flag or the program_segmentation flag is zero. If stream identifier descriptors are used, a stream identifier descriptor shall be present in each occurrence of the elementary stream loop within the PMT and shall have a unique component tag within the given program.

**Table 6-4. stream_identifier_descriptor-()**

| **Syntax** | **Bits** | **Mnemonic** |
|---|---|---|
| stream_identifier_descriptor() { | | |
| **descriptor_tag** | **8** | **uimsbf** |
| **descriptor_length** | **8** | **uimsbf** |
| **component_tag** | **8** | **uimsbf** |
| } | | |

### 6.3.1 Semantic definition of fields in Stream Identifier Descriptor

**descriptor_tag -** The descriptor_tag is an 8-bit field that identifies each descriptor. For stream_identifier_descriptor, this field shall be set to 0x52.

**descriptor_length** - The descriptor_length in an 8-bit field specifying the number of bytes of the descriptor immediately following descriptor_length field. For this descriptor, descriptor_length shall be set to 0x01.

**component_tag -** This 8-bit field identifies the component stream for associating it with a description given in a component descriptor. Within a program map section each stream identifier descriptor shall have a different value for this field.

### 7 Splice Information Table

### 7.1 Overview

The splice information table provides command and control information to the splicer. It notifies the splicer of splice events in advance of those events. It is designed to accommodate ad insertion in network feeds. In this environment, examples of splice events would include 1) a splice out of a network feed into an ad, or 2) the splice out of an ad to return to the network feed. The splice information table may be sent multiple times and splice events may be cancelled. Syntax for a splice_info_section is defined to convey the splice information table. The splice info section is carried on one or more PID stream(s) with the PID(s) declared in that program's PMT.

A splice event indicates the opportunity to splice one or more elementary streams within a program. Each splice event is uniquely identified with a splice_event_id. Splice events may be communicated in three ways: they may be scheduled ahead of time, a preroll warning may be given, or a command may be given to execute the splice event at specified Splice Points. These three types of messages are sent via the splice_info_section. The splice_command_type field specifies the message being sent. Depending on the value of this field, different constraints apply to the remaining syntax.

The following command types are specified: splice_null(), splice schedule(), splice_insert(), time_signal() and bandwidth_reservation(). If the Receiving Device does not support a command it can ignore the entire splice_info_section.

The splice_null() command is provided for extensibility. It can be used as a means of providing a heartbeat message to downstream splicing equipment.

The splice_schedule() command is a command that allows a schedule of splice events to be conveyed in advance.

The splice_insert() command shall be sent at least once before each splice point. Packets containing the entirety of the splice_info_table shall always precede the packet that contains the related splice point (i.e., the first packet that contains the first byte of an access unit whose presentation time most closely matches the signaled time in the splice_info_section).

In order to give advance warning of the impending splice (a pre-roll function), the splice_insert() command could be sent multiple times before the splice point. For example, the splice_insert() command could be sent at 8, 5, 4 and 2 seconds prior to the packet containing the related splice point. In order to meet other splicing deadlines in the system, any message received with less then 4 seconds of advance notice may not create the desired result. The splice_insert() message shall be sent at least once a minimum of 4 seconds in advance of the desired splice time for a network Out Point condition. It is recommended that, if a return-to-network (an In Point) message is sent, the same minimum 4 second pre-roll be provided.

The splice_insert() command provides for an optional break_duration() structure to identify the length of the commercial break. It is recommended that splice_insert() messages with the out_of_network_indicator set to 1 (a network Out Point) include a break_duration() structure to provide the splicer with an indication of when the network In Point will occur. The break_duration() structure provides for an optional auto_return flag that, when set to 1, indicates that the splicer is to return to the network at the end of the break (defined as Auto Return Mode, refer to Section 7.5.2.2). It is recommended that this Auto Return Mode be used to support dynamic avail durations.

The time_signal() command is provided for extensibility while preserving the precise timing allowed in the splice_insert() command. This is to allow for new features not directly related to splicing utilizing the timing capabilities of this specification while causing minimal impact to the splicing devices that conform to this specification. This allows the device that will be inserting the time into the cue message to have a defined location.

The bandwidth reservation() command is provided to allow command insertion devices to utilize a consistent amount of transport stream bandwidth. Descriptors may be used in this command, but they can not be expected to be processed and sent downstream to provide signaling information.

There are two methods for changing the parameters of a command once it has been issued. One method is to cancel the issued command by sending a splice_info_section with the splice_event_cancel_indicator set and then to send a new splice_info_section with the correct/new parameters. The other method is to simply send a subsequent message with the new data (without canceling the old message via a cue message that has the splice_event cancel_indicator bit set).

### 7.1.1 Time Base Discontinuities

In the case where a system time base discontinuity is present, packets containing a splice_insert() or time_signal() command with time expressed in the new time base shall not arrive prior to the occurrence of the time base discontinuity. Packets containing a splice_insert() or time_signal() command with time expressed in the previous time base shall not arrive after the occurrence of the time base discontinuity. See ISO/IEC 13818-4: 2004 - Information Technology - Generic coding of moving pictures and associated audio information - Part 4: Conformance testing.

The complete syntax is presented below, followed by definition of terms, followed by constraints.

### 7.2 Splice Info Section

The splice_info_section shall be carried in transport packets whereby only one section or partial section may be in any transport packet. Splice_info_sections must always start at the beginning of a transport packet payload. When a section begins in a transport packet, the pointer_field must be present and equal to 0x00 and the payload_unit_start_indicator bit must be equal to one (per the requirements of section syntax usage per ITU-T H.222.0 / ISO/IEC 13818-1).

**Table 7-1. splice_info_section()**

| **Syntax** | **Bits** | **Mnemonic** | **Encrypted** |
|---|---|---|---|
| splice_info_section() { | | | |
| **table_id** | **8** | **uimsbf** | |
| **section_syntax_indicator** | **1** | **bslbf** | |
| **private_indicator** | **1** | **bslbf** | |
| **reserved** | **2** | **bslbf** | |
| **section_length,** | **12** | **uimsbf** | |
| **protocol_version** | **8** | **uimsbf** | |
| **encrypted_packet** | **1** | **bslbf** | |
| **encryption_algorithm** | **6** | **uimsbf** | |
| **pts_adjustment** | **33** | **uimsbf** | |
| **cw_index** | **8** | **uimsbf** | |
| **reserved** | **12** | **bslbf** | |
| **splice_command_length** | **12** | **uimsbf** | |
| **splice_command_type** | **8** | **uimsbf** | **E** |
| if(splice_command_type == 0x00) | | | |
| splice_null() | | | **E** |
| if(splice_command_type == 0x04) | | | |
| splice_schedule() | | | **E** |
| if (splice_command_type == 0x05) | | | |
| splice_insert() | | | **E** |
| if(splice_command_type == 0x06) | | | |
| time_signal() | | | **E** |
| if(splice_command_type == 0x07) | | | |
| bandwidth_reservation() | | | **E** |
| if(splice_command_type == Oxff) | | | |
| private_command() | | | **E** |
| **descriptor_loop_length** | **16** | **uimsbf** | **E** |
| for(i=0; i<Nl; i++) | | | |
| splice_descriptor() | | | **E** |
| for(i=0; i<N2; i++) | | | |
| **alignment_stuffing** | **8** | **bslbf** | **E** |
| if(encrypted_packet) | | | |
| E_CRC_32 | **32** | **rpchof** | **E** |
| **CRC_32** | **32** | **rpchof** | |
| } | | | |

### 7.2.1 Semantic definition of fields in splice_info_section()

**table_id -** This is an 8-bit field. Its value shall be 0xFC.

**section_syntax_indicator -** The section syntax_indicator is a 1-bit field that should always be set to '0' indicating that MPEG short sections are to be used.

**private_indicator -** This is a 1-bit flag that shall be set to 0.

**section_length -** This is a 12-bit field specifying the number of remaining bytes in the splice_info_section immediately following the section_length field up to the end of the splice_info_section. The value in this field shall not exceed 4093.

**protocol_version -** An 8-bit unsigned integer field whose function is to allow, in the future, this table type to carry parameters that may be structured differently than those defined in the current protocol. At present, the only valid value for protocol_version is zero. Non-zero values of protocol_version may be used by a future version of this standard to indicate structurally different tables.

**encrypted_packet -** When this bit is set to '1', it indicates that portions of the splice_info_section, starting with splice_command_type and ending with and including E_CRC_32, are encrypted. When this bit is set to '0', no part of this message is encrypted. The potentially encrypted portions of the splice_info_table are indicated by an E in the Encrypted column of Table 7-1.

**encryption_algorithm -** This 6 bit unsigned integer specifies which encryption algorithm was used to encrypt the current message. When the encrypted_packet bit is zero, this field is present but undefined. Refer to section 9, and specifically Table 9-1 for details on the use of this field.

**pts_adjustment -** A 33 bit unsigned integer that appears in the clear and that shall be used by a splicing device as an offset to be added to the (sometimes) encrypted pts_time field(s) throughout this message to obtain the intended splice time(s). When this field has a zero value, then the pts time field(s) shall be used without an offset. Normally, the creator of a cueing message will place a zero value into this field. This adjustment value is the means by which an upstream device, which restamps pcr/pts/dts, may convey to the splicing device the means by which to convert the pts_time field of the message to a newly imposed time domain.

It is intended that the first device that restamps pcr/pts/dts and that passes the cueing message will insert a value into the pts_adjustment field, which is the delta time between this device's input time domain and its output time domain. All subsequent devices, which also restamp pcr/pts/dts, may further alter the pts _adjustment field by adding their delta time to the field's existing delta time and placing the result back in the pts_adjustment field. Upon each alteration of the pts_adjustment field, the altering device must recalculate and update the CRC_32 field.

The pts_adjustment shall, at all times, be the proper value to use for conversion of the pts_time field to the current time-base. The conversion is done by adding the two fields. In the presence of a wrap or overflow condition the carry shall be ignored.

**cw_index -** An 8 bit unsigned integer that conveys which control word (key) is to be used to decrypt the message. The splicing device may store up to 256 keys previously provided for this purpose. When the encrypted_packet bit is zero, this field is present but undefined.

**splice_command_length -** a 12 bit length of the splice command. Devices that are compliant with this version of the standard shall populate this field with the actual length. The value, 0xfff, is allowed to support backward compatibility.

**splice_command_type -** An 8-bit unsigned integer assigned one of the values shown in Table 7-2.

**Table 7-2. splice_command_type Values**

| **splice_command_type value** | **Command** |
|---|---|
| 0x00 | splice null |
| 0x01 | Reserved |
| 0x02 | Reserved |
| 0x03 | Reserved |
| 0x04 | splice_schedule |
| 0x05 | splice_insert |
| 0x06 | time_signal |
| 0x07 | bandwidth_reservation |
| 0x08 - 0xfe | Reserved |
| 0xff | private_command |

**descriptor_loop_length -** A 16-bit unsigned integer specifying the number of bytes used in the splice descriptor loop immediately following.

**alignment_stuffing -** When encryption is used this field is a function of the particular encryption algorithm chosen. Since some encryption algorithms require a specific length for the encrypted data, it is necessary to allow the insertion of stuffing bytes. For example, DES requires a multiple of 8 bytes be present in order to encrypt to the end of the packet. This allows standard DES to be used, as opposed to requiring a special version of the encryption algorithm.

When encryption is not used, this field shall not be used to carry valid data but may be present.

**E_CRC_32 -** This is a 32-bit field that contains the CRC value that gives a zero output of the registers in the decoder defined in ITU-T H.222.0 / ISO/IEC 13818-1 after processing the entire decrypted portion of the splice_info section. This field is intended to give an indication that the decryption was performed successfully. Hence the zero output is obtained following decryption and by processing the fields splice_command type through E_CRC_32.

**CRC_32 -** This is a 32-bit field that contains the CRC value that gives a zero output of the registers in the decoder defined in ITU-T H.222.0 / ISO/IEC 13818-1 after processing the entire splice_info_section, which includes the table_id field through the CRC 32 field. The processing of CRC_32 shall occur prior to decryption of the encrypted fields and shall utilize the encrypted fields in their encrypted state.

### 7.3 Splice Commands

### 7.3.1 splice_null()

The splice_null() command is provided for extensibility of the standard. The splice_null() command allows a splice_info_table to be sent that can carry descriptors without having to send one of the other defined commands. This command may also be used as a "heartbeat message" for monitoring cue injection equipment integrity and link integrity.

**Table 7-3. splice_null()**

| **Syntax** | **Bits** | **Mnemonic** |
|---|---|---|
| splice_null() { | | |
| } | | |

### 7.3.2 splice_schedule()

The splice_schedule() command is provided to allow a schedule of splice events to be conveyed in advance.

**Table 7-4. splice schedule()**

| **Syntax** | **Bits** | **Mnemonic** |
|---|---|---|
| splice_schedule() { | | |
| **splice_count** | **8** | **uimsbf** |
| for (i=0; i<splice_count; i++) { | | |
| **splice_event_id** | **32** | **uimsbf** |
| **splice_event_cancel_indicator** | **1** | **bslbf** |
| **reserved** | **7** | **bslbf** |
| if (splice_event_cancel_indicator == '0') { | | |
| **out_of_network_indicator** | **1** | **bslbf** |
| **program_splice_flag** | **1** | **bslbf** |
| **duration flag** | **1** | **bslbf** |
| **reserved** | **5** | **bslbf** |
| if (program_splice_flag == '1') | | |
| **utc_splice_time** | **32** | **uimsbf** |
| if (program_splice_flag == '0') { | | |
| **component_count** | **8** | **uimsbf** |
| for(j=0;j<component_count;j++) { | | |
| **component_tag** | **8** | **uimsbf** |
| **utc_splice_time** | **32** | **uimsbf** |
| } | | |
| } | | |
| if (duration_flag) | | |
| break_duration() | | |
| **unique_program_id** | **16** | **uimsbf** |
| **avail_num** | **8** | **uimsbf** |
| **avails_expected** | **8** | **uimsbf** |
| } | | |
| } | | |
| } | | |

### 7.3.2.1 Semantic definition of fields in splice_schedule()

**splice_count -** An 8-bit unsigned integer that indicates the number of splice events specified in the loop that follows.

**splice_event_id -** A 32-bit unique splice event identifier.

**splice_event_cancel_indicator-A** 1-bit flag that when set to '1' indicates that a previously sent splice event, identified by splice_event_id, has been cancelled.

**out of_network indicator -** A 1-bit flag. When set to '1', indicates that the splice event is an opportunity to exit from the network feed and that the value of utc_splice_time shall refer to an intended Out Point or Program Out Point. When set to '0', the flag indicates that the splice event is an opportunity to return to the network feed and that the value of utc_splice_time shall refer to an intended In Point or Program In Point.

**program_splice_flag -** A 1-bit flag that, when set to '1', indicates that the message refers to a Program Splice Point and that the mode is the Program Splice Mode whereby all PIDs/components of the program are to be spliced. When set to '0', this field indicates that the mode is the Component Splice

Mode whereby each component that is intended to be spliced will be listed separately by the syntax that follows.

**duration_flag -** A 1-bit flag that indicates the presence of the break_duration() field.

**utc_splice_time -** A 32-bit unsigned integer quantity representing the time of the signaled splice event as the number of seconds since 00 hours UTC, January 6^{th}, 1980, with the count of intervening leap seconds included. The utc_splice_time may be converted to UTC without the use of the GPS_UTC_offset value provided by the System Time table. The utc_splice_time field is used only in the splice_schedule() command.

**component_count -** An 8-bit unsigned integer that specifies the number of instances of elementary PID stream data in the loop that follows. Components are equivalent to elementary PID streams.

**component_tag -** An 8-bit value that identifies the elementary PID stream containing the Splice Point specified by the value of splice_time() that follows. The value shall be the same as the value used in the stream_identification_descriptor() to identify that elementary PID stream.

**unique_program_id -** This value should provide a unique identification for a viewing event within the service. Note: See SCTE 118-2 for guidance in setting values for this field.

**avail_num -** (previously 'avail') This field provides an identification for a specific avail within one unique_program_id. This value is expected to increment with each new avail within a viewing event. This value is expected to reset to one for the first avail in a new viewing event. This field is expected to increment for each new avail. It may optionally carry a zero value to indicate its non-usage.

**avails_expected -** (previously 'avail_count') This field provides a count of the expected number of individual avails within the current viewing event. When this field is zero, it indicates that the avail_num field has no meaning.

### 7.3.3 splice_insert()

The splice_insert() command shall be sent at least once for every splice event. Please reference section 5.3 for the use of this message.

**Table 7-5. splice_insert()**

| **Syntax** | **Bits** | **Mnemonic** |
|---|---|---|
| splice_insert() { | | |
| **splice_event_id** | **32** | **uimsbf** |
| **splice_event_cancel_indicator** | **1** | **bsIbf** |
| **reserved** | **7** | **bslbf** |
| if(splice_event_cancel_indicator == '0') { | | |
| **out_of_network_indicator** | **1** | **bsIbf** |
| **program_splice_flag** | **1** | **bslbf** |
| **duration_flag** | **1** | **bslbf** |
| **splice_immediate_flag** | **1** | **bslbf** |
| **reserved** | **4** | **bslbf** |
| If((program_splice_flag =='1') && (splice_immediate_flag == '0')) | | |
| splice_time() | | |
| if(program_splice_flag == '0') { | | |
| **component_count** | **8** | **uimsbf** |
| for(i=0;i<component_count;i++) { | | |
| **component_tag** | **8** | **uimsbf** |
| if(splice_immediate_flag == '0') | | |
| splice_time() | | |
| } | | |
| } | | |
| if(duration_flag == '1') | | |
| break_duration() | | |
| **unique_program id** | **16** | **uimsbf** |
| **avail_num** | **8** | **uimsbf** |
| **avails_expected** | **8** | **uimsbf** |
| } | | |
| } | | |

### 7.3.3.1 Semantic definition of fields in splice_insert()

**splice_event_id -** A 32-bit unique splice event identifier.

**splice_event_cancel_indicator - A** 1-bit flag that when set to '1' indicates that a previously sent splice event, identified by splice_event_id, has been cancelled.

**out of_network indicator -** A 1-bit flag. When set to '1', indicates that the splice event is an opportunity to exit from the network feed and that the value of splice_time(), as modified by pts_adjustment, shall refer to an intended Out Point or Program Out Point. When set to '0', the flag indicates that the splice event is an opportunity to return to the network feed and that the value of splice_time(), as modified by pts_adjustment, shall refer to an intended In Point or Program In Point.

**program_splice_flag -** A 1-bit flag that, when set to '1', indicates that the message refers to a Program Splice Point and that the mode is the Program Splice Mode whereby all PIDs/components of the program are to be spliced. When set to '0', this field indicates that the mode is the Component Splice Mode whereby each component that is intended to be spliced will be listed separately by the syntax that follows.

**duration_flag -** A 1-bit flag that, when set to '1', indicates the presence of the break_duration() field.

**splice_immediate_flag** -When this flag is '1', it indicates the absence of the splice_time() field and that the splice mode shall be the Splice Immediate Mode, whereby the splicing device shall choose the nearest opportunity in the stream, relative to the splice information packet, to splice. When this flag is '0', it indicates the presence of the splice_time() field in at least one location within the splice_insert() command.

**component**_**count** - An 8-bit unsigned integer that specifies the number of instances of elementary PID stream data in the loop that follows. Components are equivalent to elementary PID streams.

**component**_**tag** - An 8-bit value that identifies the elementary PID stream containing the Splice Point specified by the value of splice_time() that follows. The value shall be the same as the value used in the stream_identification_descriptor() to identify that elementary PID stream.

**unique_program_id** - This value should provide a unique identification for a viewing event within the service. Note: See SCTE 118-2 for guidance in setting values for this field.
**avail**_**num** - (previously 'avail') This field provides an identification for a specific avail within one unique_program id. This value is expected to increment with each new avail within a viewing event. This value is expected to reset to one for the first avail in a new viewing event. This field is expected to increment for each new avail. It may optionally carry a zero value to indicate its non-usage.

**avails_expected -** (previously 'avail count') This field provides a count of the expected number of individual avails within the current viewing event. When this field is zero, it indicates that the avail field has no meaning.

### 7.3.4 time_signal()

The time_signal() provides a time synchronized data delivery mechanism. The syntax of the time_signal() allows for the synchronization of the information carried in this message with the System Time Clock (STC). The unique payload of the message is carried in the descriptor, however the syntax and transport capabilities afforded to splice_insert() messages are also afforded to the time_signal(). The carriage however can be in a different PID than that carrying the other cue messages used for signaling splice points.

If the time_specified flag is set to 0, indicating no pts_time in the message, then the command shall be interpreted as an immediate command. It must be understood that using it in this manner will cause an unspecified amount of accuracy error.

Since the time_signal() command utilizes descriptors for most of the specific information, this command could exceed one MPEG transport packet in length. It is strongly recommended to keep this command to one packet if possible. This may not always be possible in situations, for example, where the unique information is long or where another specification is used for the definition of this unique information.

**Table 7-6. time_signal()**

| **Syntax** | **Bits** | **Mnemonic** |
|---|---|---|
| time_signal() { | | |
| **splice_time()** | | |
| } | | |

### 7.3.4.1 Semantic definition of time_signal()

This time_signal() provides a uniform method of associating a pts_time sample with an arbitrary descriptor (or descriptors) as provided by the splice_info_section syntax (see Table 7-1). Please refer to section 8 for Splice Descriptors.

### 7.3.5 bandwidth_reservation()

The bandwidth_reservation() command is provided for reserving bandwidth in a multiplex. A typical usage would be in a satellite delivery system that requires packets of a certain PID to always be present at the intended repetition rate to guarantee a certain bandwidth for that PID. This message differs from a splice_null() command so that it can easily be handled in a unique way by receiving equipment (i.e. removed from the multiplex by a satellite receiver). If a descriptor is sent with this command, it can not be expected that it will be carried through the entire transmission chain and it should be a private descriptor that is utilized only by the bandwidth reservation process.

**Table 7-7. bandwidth_reservation()**

| **Syntax** | **Bits** | **Mnemonic** |
|---|---|---|
| bandwidth_reservation() { | | |
| } | | |

### 7.3.6 private_command()

The private_command() structure provides a means to distribute user-defined commands using the SCTE 35 protocol. The first bit field in each user-defined command is a 32-bit identifier, unique for each participating vendor. Receiving equipment should skip any splice_info_section() messages containing private_command() structures with unknown identifiers.

**Table 7-8. private_command()**

| **Syntax** | **Bits** | **Mnemonic** |
|---|---|---|
| private_command() { | | |
| **identifier** | **32** | **uimsbf** |
| for(i=0; i<N; i++) { | | |
| **private_byte** | **8** | **uimsbf** |
| } | | |
| } | | |

**identifier -** The identifier is a 32-bit field as defined in ISO/IEC 13818-1 [C3], section 2.6.8 and 2.6.9, for the registration_descriptor() format_identifier. Only identifier values registered and recognized by SMPTE Registration Authority, LLC should be used. Its use in the private_command() structure shall scope and identify only the private information contained within this command. This 32 bit number is used to identify the owner of the command.

**private_byte -** The remainder of the descriptor is dedicated to data fields as required by the descriptor being defined.

Private means for communicating detailed vendor-unique ancillary information SHOULD be the only use of such data, and it SHALL NOT provide the same result as a standardized command.

### 7.4 Time

### 7.4.1 splice_times

The splice_time() structure, when modified by pts_adjustment, specifies the time of the splice event.

**Table 7-9. splice_time()**

| **Syntax** | **Bits** | **Mnemonic** |
|---|---|---|
| splice_time() { | | |
| **time_specified_flag** | **1** | **bslbf** |
| if(time_specified_flag == 1) { | | |
| **reserved** | **6** | **bslbf** |
| **pts_time** | **33** | **uimsbf** |
| } | | |
| else | | |
| **reserved** | **7** | **bslbf** |
| } | | |

### 7.4.1.1 Semantic definition of fields in splice_time()

**time_specified_flag -** A 1-bit flag that, when set to '1', indicates the presence of the pts_time field and associated reserved bits.

**pts_time -** A 33-bit field that indicates time in terms of ticks of the program's 90 kHz clock. This field, when modified by pts_adjustment, represents the time of the intended splice point.

### 7.4.2 break_duration()

The break_duration() structure specifies the duration of the commercial break(s). It may be used to give the splicer an indication of when the break will be over and when the network In Point will occur.

**Table 7-10. break_duration()**

| **Syntax** | **Bits** | **Mnemonic** |
|---|---|---|
| break_duration() { | | |
| **auto_return** | **1** | **bslbf** |
| **reserved** | **6** | **bslbf** |
| **duration** | **33** | **uimsbf** |
| } | | |

### 7.4.2.1 Semantic definition of fields in break_duration()

**auto_return -** A 1-bit flag that, when set to '1', denotes that the duration shall be used by the splicing device to know when the return to the network feed (end of break) is to take place. A splice_insert() command with out_of_network_indicator set to 0 is not intended to be sent to end this break. When this flag is '0', the duration field, if present, is not required to end the break because a new splice_insert() command will be sent to end the break. In this case, the presence of the break_duration field acts as a safety mechanism in the event that a splice_insert() command is lost at the end of a break.

**duration -** A 33-bit field that indicates elapsed time in terms of ticks of the program's 90 kHz clock.

### 7.5 Constraints

### 7.5.1 Constraints on splice_info_section()

The splice_info_ section shall be carried in one or more PID stream(s) that are specific to a program and referred to in the PMT. The splice_info_section PID(s) shall be identified in the PMT by stream_type equal to 0x86.

The splice_info_section carried in one or more PID stream(s) referenced in a program's PMT shall contain only information about splice events that occur in that program.

A splice event shall be defined by a single value of splice_event_id.

If the Component Splice Mode will be used, then each elementary PID stream shall be identified by a stream_identifier_descriptor carried in the PMT loop, one for each PID. The stream_identifier_descriptor shall carry a component_tag, which uniquely corresponds to one PID stream among those contained within a program and listed in the PMT for that program.

Any splice_event_id that is sent in a splice_info_section using a splice_schedule() command shall be sent again prior to the event using a splice_insert() command. Hence, there shall be a correspondence between the splice_event_id values chosen for particular events signaled by the splice_schedule() command (distant future) and splice_event_id values utilized in the splice_insert() command (near future) to indicate the same events.

Splice_event_id values do not need to be sent in an incrementing order in subsequent messages nor must they increment chronologically. Splice_event_id values may be chosen at random. When utilizing the splice_schedule() command, splice_event_id values shall be unique over the period of the splice_schedule() command. A splice_event_id value may be re-used when its associated splice time has passed.

When the splice_immediate_flag is set to 1, the time to splice shall be interpreted as the current time. This is called the "Splice Immediate Mode". When this form is used with the splice_insert() command, the splice may occur at the nearest (prior or subsequent) opportunity that is detected by the splicer. The "Splice Immediate Mode" may be used for both splicing entry and exit points, i.e. for both states of out_of_network_indicator.

It shall be allowed that any avail may be ended with a Program Splice Mode message, a Component Splice Mode message or no message (whereby the break_duration is reached) regardless of the nature of the message at the beginning of the avail.

### 7.5.2 Constraints on the interpretation of time

### 7.5.2.1 Constraints on splice_time() for splice_insert()

For splice_command_type equal to 0x05 (splice_insert()) the following constraints on splice_time() shall apply:
At least one message for a network Out Point must arrive at least 4 seconds in advance of the signaled splice time (pts time as modified by pts_adjustment) if the time is specified. A Splice Immediate Mode message is allowed for a network Out Point, but the actual splice time is not defined and it is recommended that Splice Immediate Mode messages only be used for the early termination of breaks. When non-Splice Immediate Mode cue messages are used for network In Points, the cue message must arrive at the splicer before the arrival of the signaled In Point picture at the receiver.

An Out Point lies between two presentation units. The intended Out Point of a signaled splice event shall be the Out Point that is immediately prior to the presentation unit whose presentation time most closely matches the signaled pts_time as modified by pts_adjustment.

An In Point lies between two presentation units. The intended In Point of a signaled splice event shall be the In Point that is immediately prior to the presentation unit whose presentation time most closely matches the signaled pts_time as modified by pts_adjustment.

When the Component Splice Mode is in effect and the out_of_network_indicator is '1' (the beginning of a break), each component listed in the splice_insert() component loop shall be switched from the network component to the splicer supplied component at the time indicated. Components not listed in the component loop of the message will remain unchanged: if a splicer output component was the network component then it will remain the network component; if a splicer output component was the splicer supplied component then it will remain the splicer supplied component.

When the Component Splice Mode is in effect and the out_of_network indicator is '0' (the end of a break), each component listed in the splice_insert() component loop shall be switched from the splicer supplied component to the network component at the time indicated. Components not listed in the component loop of the message will remain unchanged: if a splicer output component was the network component then it will remain the network component; if a splicer output component was the splicer supplied component then it will remain the splicer supplied component.

When the Component Splice Mode is in effect and the Splice Immediate Mode is not in effect, the first component listed in the component loop of the splice_insert() command shall have a valid pts_time in its associated splice_time() and this pts_time is referred to as the default pts_time. Subsequent components listed in the component loop of the same message, which don't have an associated pts_time, shall utilize this default pts_time. It shall be allowed that any and all components following the first listed component of a splice_insert() command may contain a unique pts_time that is different from the default pts_time.

In the Component Splice Mode, all pts_time values given in the splice_insert component loop shall be modified by the pts_adjustment field to obtain each intended value for the signaled Out Point or In Point. The pts_adjustment, provided by any device that generates or modifies a pts_adjustment field value, shall apply to all pts_time fields in the message.

### 7.5.2.2 Constraints on break_duration() for splice_insert()

For splice_command_type equal to 0x05 (insert) the following constraints on break_duration() shall apply:
The value given in break_duration() is interpreted as the intended duration of the commercial break. It is an optional field to be used when the out_of_network_indicator equals 1. It may be used in the same splice_insert() command that specifies the start time of the break, so that the splicer can calculate the time when the break will be over.

Breaks may be terminated by issuing a splice_insert() command with out_of_network_indicator set to 0. A splice_time() may be given or the Splice Immediate Mode may be used. When a break_duration was given at the start of the break (where the auto_return was set to zero), the break_duration value may be utilized as a backup mechanism for insuring that a return to the network actually happens in the event of a lost cueing packet.

Breaks may also be terminated by giving a break duration at the beginning of a break and relying on the splicing device to return to the network feed at the proper time. The auto_return flag must be 1. This will be referred to as the Auto Return Mode. Auto Return Mode breaks do not require and do not disallow cue messages at the end of the break with out_of_network_indicator set to 0. Hence a receiving device should not expect a cue message at the end of a break in order to function properly. Auto Return Mode breaks may however be terminated early. To end the break prematurely a second splice_insert() command may be given, where the out_of_network_indicator equals 0. The new time of the back to network splice may be given by an updated splice_time(), or the Splice Immediate Mode message may be used. A cue message with out of_network_indicator set to 0 shall always override the duration field of a previous cue message (with out of_network_indicator set to 1) if that break's signaled duration is still under way.

### 8 Splice Descriptors

### 8.1 Overview

The splice_descriptor is a prototype for adding new fields to the splice_info_section. All descriptors included use the same syntax for the first six bytes. In order to allow private information to be added we have included the 'identifier' code. This removes the need for a registration descriptor in the descriptor loop.

Any receiving equipment should skip any descriptors with unknown identifiers or unknown descriptor tags. For descriptors with known identifiers, the receiving equipment should skip descriptors with an unknown splice_descriptor tag.

Splice descriptors may exist in the splice info section for extensions specific to the various commands.

**Table 8-1. Splice Descr-iptor Tags**

| **Tag** | **Descriptors for Identifier "CUEI"** |
|---|---|
| 0x00 | avail_descriptor |
| 0x01 | DTMF_descriptor |
| 0x02 | segmentation_descriptor |
| 0x03 - 0xFF | Reserved for future SCTE splice_descriptors |

### 8.2 Splice Descriptor

The Splice Descriptor syntax provided in this section is to be used as a template for specific implementations of a descriptor intended for the splice_info_section. It should be noted that splice descriptors are only used within a splice_info_section. They are not to be used within MPEG syntax, such as the PMT, or in the syntax of any other standard. This allows one to draw on the entire range of descriptor tags when defining new descriptors.

**Table 8-2. splice_descriptor()**

| **Syntax** | **Bits** | **Mnemonic** |
|---|---|---|
| splice descriptor() { | | |
| **splice_descriptor_tag** | **8** | **uimsbf** |
| **descriptor_length** | **8** | **uimsbf** |
| **identifier** | **32** | **uimsbf** |
| for(i=0; i<N; i++) { | | |
| **private_byte** | **8** | **uimsbf** |
| } | | |
| } | | |

### 8.2.1 Semantic definition of fields in splice_descriptor()

**splice_descriptor_tag -** This 8 bit number defines the syntax for the private bytes that make up the body of this descriptor. The descriptor tags are defined by the owner of the descriptor, as registered using the identifier.

**descriptor_length -** This 8 bit number gives the length, in bytes, of the descriptor following this field. Descriptors are limited to 256 bytes, so this value is limited to 254.

**identifier -** The identifier is a 32-bit field as defined in ISO/IEC 13818-1 [C3], section 2.6.8 and 2.6.9, for the registration_descriptor() format_identifier. Only identifier values registered and recognized by SMPTE Registration Authority, LLC should be used. Its use in this descriptor shall scope and identify only the private information contained within this descriptor. This 32 bit number is used to identify the owner of the descriptor. The code 0x43554549 (ASCII "CUEI") for descriptors defined in this specification has been registered with SMPTE.

**private_byte -** The remainder of the descriptor is dedicated to data fields as required by the descriptor being defined.

### 8.3 Specific Splice Descriptors

### 8.3.1 avail_descriptor()

The avail_descriptor is an implementation of a splice_descriptor. It provides an optional extension to the splice_insert() command that allows an authorization identifier to be sent for an avail. Multiple copies of this descriptor may be included by using the loop mechanism provided. This identifier is intended to replicate the functionality of the cue tone system used in analog systems for ad insertion. This descriptor is intended only for use with a splice_insert() command, within a splice_info_section.

**Table 8-3. avail_descriptor()**

| **Syntax** | **Bits** | **Mnemonic** |
|---|---|---|
| avail_descriptor() { | | |
| **splice_descriptor_tag** | **8** | **uimsbf** |
| **descriptor_length** | **8** | **uimsbf** |
| **identifier** | **32** | **uimsbf** |
| **provider_avail_id** | **32** | **uimsbf** |
| } | | |

### 8.3.1.1 Semantic definition of fields in avail_descriptor()

**splice_descriptor_tag -** This 8-bit number defines the syntax for the private bytes that make up the body of this descriptor. The splice_descriptor tag shall have a value of 0x00.

**descriptor_length -** This 8-bit number gives the length, in bytes, of the descriptor following this field. The descriptor_length field shall have a value of 0x08.

**identifier -** This 32-bit number is used to identify the owner of the descriptor. The identifier shall have a value of 0x43554549 (ASCII "CUEI").

**provider_avail_id -** This 32-bit number provides information that a receiving device may utilize to alter its behavior during or outside of an avail. It may be used in a manner similar to analog cue tones. An example would be a network directing an affiliate or a headend to black out a sporting event.

### 8.3.2 DTMF_descriptor()

The DTMF_descriptor() is an implementation of a splice_descriptor. It provides an optional extension to the splice_insert() command that allows a receiver device to generate a legacy analog DTMF sequence based on a splice_info_section being received.

**Table 8-4. DTMF_descriptor()**

| **Syntax** | **Bits** | **Mnemonic** |
|---|---|---|
| DTMF_descriptor() { | | |
| **splice_descriptor_tag** | **8** | **uimsbf** |
| **descriptor_length** | **8** | **uimsbf** |
| **identifier** | **32** | **uimsbf** |
| **preroll** | **8** | **uimsbf** |
| **dtmf_count** | **3** | **uimsbf** |
| **reserved** | **5** | **bslbf** |
| for(i=0; i<**dtmf_count**; i++) { | | |
| **DTMF char** | **8** | **uimsbf** |
| } | | |
| } | | |

### 8.3.2.1 Semantic definition of fields in DTMF_descriptor()

**splice_descriptor_tag -** This 8-bit number defines the syntax for the private bytes that make up the body of this descriptor. The splice_descriptor_tag shall have a value of 0x01.

**descriptor**_**length -** This 8-bit number gives the length, in bytes, of the descriptor following this field.

**identifier -** This 32-bit number is used to identify the owner of the descriptor. The identifier shall have a value of 0x43554549 (ASCII "CUEI").

**preroll -** This 8-bit number is the time the DTMF is presented to the analog output of the device in tenths of seconds. This gives a preroll range of 0 to 25.5 seconds. The splice info section shall be sent at least two seconds earlier then this value. The minimum suggested preroll is 4.0 seconds.

**dtmf_count -** This value of this flag is the number of DTMF characters the device is to generate.

**DTMF_char -** This is an ASCII value for the numerals '0' to '9', '*', '#'. The device shall use these values to generate a DTMF sequence to be output on an analog output. The sequence shall complete with the last character sent being the timing mark for the preroll.

### 8.3.3 segmentation_descriptor()

The segmentation_descriptor() is an implementation of a splice_descriptor(). It provides an optional extension to the time_signal() command that allows for segmentation messages to be sent in a time/video accurate method. This descriptor shall only be used with the time_signal() and the splice_null() commands. The time_signal() message should be sent at least once a minimum of 4 seconds in advance of the signaled splice_time() to permit the insertion device to place the splice_info_section( ) accurately.

Devices that do not recognize a value in any field shall ignore the message and take no action.

**Table 8-5. segmentation_descriptor()**

| **Syntax** | **Bits** | **Mnemonic** |
|---|---|---|
| segmentation_descriptor() { | | |
| **splice_descriptor_tag** | **8** | **uimsbf** |
| **descriptor_length** | **8** | **uimsbf** |
| **identifier** | **32** | **uimsbf** |
| **segmentation_event_id** | **32** | **uimsbf** |
| **segmentation_event_cancel_indicator** | **1** | **bslbf** |
| **reserved** | **7** | **bslbf** |
| if(segmentation_event_cancel_indicator == '0') { | | |
| **program_segmentation_flag** | **1** | **bslbf** |
| **segmentation_duration_flag** | **1** | **bslbf** |
| **reserved** | **6** | **bslbf** |
| if(program_segmentation_flag == '0') { | | |
| **component_count** | **8** | **uimsbf** |
| for(i=0;i<component_count;i++) { | | |
| **component_tag** | **8** | **uimsbf** |
| **reserved** | **7** | **bslbf** |
| **pts_offset** | **33** | **uimsbf** |
| } | | |
| } | | |
| if(**segmentation_duration_flag=='1'**) | | |
| segmentation_duration | **40** | **uimsbf** |
| **segmentation_upid_type** | **8** | **uimsbf** |
| **segmentation_upid_length** | **8** | **uimsbf** |
| **segmentation_upid()** | | |
| **segmentation_type_id** | **8** | **uimsbf** |
| **segment_num** | **8** | **uimsbf** |
| **segments_expected** | **8** | **uimsbf** |
| } | | |
| } | | |

### 8.3.3.1 Semantic definition of fields in segmentation_descriptor()

**splice_descriptor_tag -** This 8-bit number defines the syntax for the private bytes that make up the body of this descriptor. The splice_descriptor_tag shall have a value of 0x02.

**descriptor_length -** This 8-bit number gives the length, in bytes, of the descriptor following this field.

**identifier -** This 32-bit number is used to identify the owner of the descriptor. The identifier shall have a value of 0x43554549 (ASCII "CUEI").

**segmentation_event_id -** A 32-bit unique segmentation event identifier. Only one occurrence of a given segmentation_event_id value shall be active at any one time. See discussion in Section 8.3.3.2 (below).

**segmentation_event_cancel_indicator -** A1-bit flag that when set to '1' indicates that a previously sent segmentation event, identified by segmentation_event_id, has been cancelled. The segmentation_type_id does not need to match between the original/cancelled segmentation event message and the message with the segmentation_event_cancel_indicator true. Once a segmentation event is cancelled the segmentation_event_id may be reused for content identification or to start a new segment.

**program_segmentation_flag -** A 1-bit flag that should be set to '1' indicating that the message refers to a Program Segmentation Point and that the mode is the Program Segmentation Mode whereby all PIDs/components of the program are to be segmented. When set to '0', this field indicates that the mode is the Component Segmentation Mode whereby each component that is intended to be segmented will be listed separately by the syntax that follows. The program_segmentation_flag can be set to different states during different descriptors messages within a program.

**segmentation_duration_flag -** A 1-bit flag that should be set to '1' indicating the presence of segmentation_duration field. If segmentation_type_id is set to 0x01 (Content Identification) then this flag shall be set to '0'.

**component_count -** An 8-bit unsigned integer that specifies the number of instances of elementary PID stream data in the loop that follows. Components are equivalent to elementary PID streams.

**component_tag -** An 8-bit value that identifies the elementary PID stream containing the Segmentation Point specified by the value of splice_time() that follows. The value shall be the same as the value used in the stream_identification_descriptor() to identify that elementary PID stream. The presence of this field from the component loop denotes the presence of this component of the asset.

**pts_offset -** A 33 bit unsigned integer that shall be used by a splicing device as an offset to be added to the pts_time in the time_signal() message to obtain the intended splice time(s). When this field has a zero value, then the pts_time field(s) shall be used without an offset. If splice_time() time_specified_flag = 0 or if the command this descriptor is carried with does not have a splice_time() field, this field shall be used to offset the derived immediate splice time.

**segmentation_duration -** A 40 bit unsigned integer that specifies the duration of the segment in terms of ticks of the program's 90 kHz clock. It may be used to give the splicer an indication of when the segment will be over and when the next segmentation message will occur. Must be 0 for end messages.

**segmentation_upid_type -** A value from the following table. There are multiple types allowed to insure that programmers will be able to use an id that their systems support. It is expected that the consumers of these ids will have an out-of-band method of collecting other data related to these numbers and therefore they do not need to be of identical types. These ids may be in other descriptors in the program and, where the same identifier is used (V-ISAN for example), it shall match between programs.

**Table 8-6. segmentation_lipid_type**

| **segmentation_upid_type** | **segmentation_upid_length (Bytes)** | **segmentation upid() (Name)** | **Description** |
|---|---|---|---|
| 0x00 | 0 | Not Used | The **segmentation_upid** is not defined and is not present in the descriptor. |
| 0x01 | variable | User Defined | The **segmentation_upid** does not follow a standard naming scheme. |
| 0x02 | 8 | ISCI | 8 characters; 4 alpha characters followed by 4 numbers. |
| 0x03 | 12 | Ad-ID | Defined by the Advertising Digital Identification, LLC group. 12 characters; 4 alpha characters (company identification prefix) followed by 8 alphanumeric characters. |
| 0x04 | 32 | UMID | SMPTE 330M |
| 0x05 | 8 | ISAN | ISO 15706 binary encoding. |
| 0x06 | 12 | V-ISAN | ISO 15706-2 binary encoding ("versioned" ISAN). |
| 0x07 | 12 | TID | Tribune Media Systems Program identifier. 12 characters; 2 alpha characters followed by 10 numbers. |
| 0x08 | 2 | TI | Turner Identifier |
| 0x09 | variable | ADI | MD-SP-ADI2.0-AS-I03-070105. |
| 0x0A-0xFF | variable | Reserved | Reserved for future standardization. |

When the value of segmentation_upid type is 0x09 (ADI), it shall have the abbreviated syntax of <element>:<providerID>/<assetID> as specified in Section 5.2 of MD-SP-ADI2.0-AS-I03-070105, represented as 7-bit ASCII characters (values ranging from 0x20 (space) to 0x7E (tilde)). The variable "element" shall take only the values "PREVIEW", "MPEG2HD", "MPEG2SD", and "OTHER".

**segmentation_upid_length -** Length in bytes of segmentation_upid() as indicated by Table 8-6.

**segmentation_upid() -** Length and identification from Table 8-6. This structure's contents and length are determined by the segmentation upid_type and segmentation_upid_length fields. An example would be a type of 0x06 for V-ISAN and a length of 12 bytes. This field would then contain the V-ISAN identifier for the content to which this descriptor refers.

**segmentation_type_id -** The 8 bit value shall contain one of the values in Table 8-7 to designate type of segmentation. All unused values are reserved. When the segmentation_type_id is 0x01 (Content Identification), the value of segmentation_upid_type shall be non-zero.

**Table 8-7. segmentation_type_id**

| **Segmentation Message** | **Segmentation_type_id** | **segment_num** | **segments_expected** |
|---|---|---|---|
| Not Indicated | 0x00 | 0 | 0 |
| Content Identification | 0x01 | 0 | 0 |
| Program Start | 0x10 | 1 | 1 |
| Program End | 0x11 | 1 | 1 |
| Program Early Termination | 0x12 | 1 | 1 |
| Program Breakaway | 0x13 | 1 | 1 |
| Program Resumption | 0x14 | 1 | 1 |
| Program Runover Planned | 0x15 | 1 | 1 |
| Program Runover Unplanned | 0x16 | 1 | 1 |
| Chapter Start | 0x20 | Non-zero | Non-zero |
| Chapter End | 0x21 | Non-zero | Non-zero |
| Provider Advertisement Start | 0x30 | 0 or Non-zero | 0 or Non-zero |
| Provider Advertisement End | 0x31 | 0 or Non-zero | 0 or Non-zero |
| Distributor Advertisement Start | 0x32 | 0 or Non-zero | 0 or Non-zero |
| Distributor Advertisement End | 0x33 | 0 or Non-zero | 0 or Non-zero |
| Unscheduled_event_start | 0x40 | 0 | 0 |
| Unscheduled_event_end | 0x41 | 0 | 0 |

**segment_num -** This field provides identification for a specific chapter or advertisement within a segmentation_upid(). This value, when utilized, is expected to reset to one for the first chapter in a new viewing event. This field is expected to increment for each new segment (such as a chapter). The value of this field shall be as indicated in Table 8-7.

**segments_expected -** This field provides a count of the expected number of individual segments (such as chapters) within the current segmentation event. The value of this field shall be as indicated in Table 8-7.

### 8.3.3.2 Segmenting Content - Additional semantics

One use of this descriptor is to signal content Segments. Segments are expected to have a logical hierarchy consisting of programs (highest level), chapters, and advertisements (refer to Table 8-7, above). Provider and distributor advertisements share the lowest logical level and should not overlap.

For the purposes of defining the semantics stated in this document section, the following definition applies:
*Segment -* Shall be either a *Program,* a *Chapter, a Provider Advertisement, a Distributor Advertisement,* or an *Unscheduled Event* as listed in Table 8-7, segmentation_type_id. Occurrences of the segmentation_descriptor() that support Segments typically occur in pairs. The valid pairings are:
   - Program start/end - Program end can be overridden by Program Early Termination
   - Program breakaway/resumption
   - Chapter start/end
   - Provider advertisement start/end
   - Distributor advertisement start/end
   - Unscheduled_event_start/end

The following segmentation_types (from Table 8-8) also support Segments but are not paired:
- Program Runover Planned
- Program Runover Unplanned

The following segmentation_types (from Table 8-8) are outside of the scope of this document section. They are not considered to support Segments (Segmenting Content):
- Not Indicated
- Content Identification

Descriptors should normally be paired, once for a given Segment start and then for Segment end. Each Segment end usage may be followed by another Segment start of the same logical level Segment. Refer to Section 8.3.3.3 (Programs) and Section 8.3.3.4 (Chapters) for additional semantics. When a Segment's duration is provided, and that duration expires without a Segment end being signaled, then the value of **segmentation_event_id** may be reused if appropriate. Such inferred Segment end cases are not to be encouraged and should not be used.

In order to associate different types of segmentation constructs (such as associating Program level constructs with Chapter level constructs) the same segmentation_upid() may be used in the associated constructs. This however is not required.

The semantics of the fields within the segmentation_descriptor() for segmenting content are as follows:
**segmentation_event_id -** When a Segment start is signaled, the segmentation_event_id value becomes active. While active this value shall not be used to identify other segmentation events. When a Segment end is signaled, the segmentation_event_id value shall match the segment start segmentation_event_id value and this value then becomes inactive and hence able to be used again for a new segmentation_descriptor() occurrence including non-Segment usage such as Content Identification.

**program_segmentation_flag** - Shall be set to '1'.

**segmentation_duration_flag -** If set to '1', a valid segmentation_duration shall be included in the descriptor. If segmentation_type_id is set to 0x10 (Program Start) then this flag may be set to '0'.

**segment_num -** Shall be set to non-zero values for Chapters ranging from one to the value of segments_expected. For Program segments, this value shall be set to one. This field may be optionally utilized for Advertisements in the same manner as Chapters.

**segments_expected** Shall be set to a non-zero value, providing the number of Chapters (and optionally Advertisements) in the program. For Program segments, this value shall be set to one.

### 8.3.3.3 Programs - Additional semantics

When signaled, a Program shall begin with a segmentation_descriptor() containing a **segmentation_type_id** value of 0x10 (Program Start). The Program shall utilize a single and unique value for **segmentation_event_id** in all descriptors that pertain to this Program. The usage of a **segmentation_upid()** is optional but, if used, its value must be uniquely assigned to this Program and not shared by Programs that are embedded within this Program. A Program shall end with a segmentation_descriptor() containing a **segmentation_type_id** value of 0x11 (Program End) or 0x12 (Program Early Termination).

The following segmentation messages shall only occur between the Program Start and Program end (Program End or Program Early Termination): Program Beakaway (**segmentation_type_id** value of 0x13); Program Resumption (**segmentation_type_id** value of 0x14); Program Runover Planned (**segmentation_type_id** value of 0x15); or Program Runover Unplanned (**segmentation_type_id** value of 0x16). A Program Resumption may only follow a Program Breakaway. A program may be ended while in a Program Breakaway state.

Following a Program Beakaway, another Program Start to Program End sequence may occur, with new values of **segmentation_event_id** and **segmentation_upid().** An entire embedded Program or Segments of an embedded Program shall be situated only between a Program Breakaway and a Program Resumption. Multiple instances of embedded Programs may occur. Note: Program Runover messages are asynchronous notifications and may occur at any time between the start and end of the program including within another embedded active program.

If provided the segmentation_duration is considered from the splice_time() of the time_signal command, if time is present, or from the time the message is received. The duration clock continues to increment during Program Breakaways. Segmentation_duration can be extended using a Runover Planned or Runover Unplanned message. The value supplied in the new message is an update to the overall duration of the program and represents the elapsed time from the effective moment of the new message to the end of the segment. It is not an addition of elapsed time. If segmentation_duration is specified, when the duration is exceeded the program shall be considered terminated.

If at Program start a duration is not provided, a duration may be provided at a later time using a Program Runover Planned or Program Runover Unplanned message.

If a duration is in effect, either set at Program start or later introduced, segmentation_duration may be set to zero by sending a Program Runover Planned or Program Runover Unplanned message with segmentation_duration_flag set to '0'.

A Content Identification (value of segmentation_type_id 0x01) message with a value of **segmentation_upid( )** matching the currently active Program may be sent on a periodic basis to make an implementation more robust. If sent it shall match the values of **segmentation_event_id** and **segmentation_upid( )** used in the Program related messages. This does not restrict Content Identification messages being sent that do not match the **segmentation_event_id** and **segmentation_upid( )** used in the Program related messages.

### 8.3.3.4 Chapters - Additional semantics

A chapter Segment shall be introduced by a Chapter Start and ended by a Chapter End. For Chapter End, the value of **segmentation event id** shall match the value of **segmentation_event_id** for Chapter Start. If present, the **segmentation_upid()** shall be the same in both occurrences of a segmentation_descriptor() pair.

Chapter Segments may be associated with Program segments using the same **segmentation_upid()** on both Chapter and Program messages.

Chapters may overlap. Chapters may be numbered using **segment_num. Segments_expected** shall indicate the expected number of chapters. Use of non-zero values for **segmentation_duration** on Chapter Start is optional.

### 9 Encryption

### 9.1 Overview

The splice_info_section supports the encryption of a portion of the section in order that one may prevent access to an avail to all except those receivers that are authorized for that avail. This chapter of the document describes the various encryption algorithms that may be used. The encryption of the section is optional, as is the implementation of encryption by either the creator of the message, or any receive devices. The use of encryption is deemed optional to allow a manufacturer to ship "in-the-clear" systems without worrying about the export of encryption technology. If encryption is included in the system, any receive device shall implement all of the algorithms listed in this document, which allows the creator of a splice info table to use any of the algorithms in a transmission. The use of private encryption technology is optional, and out of the scope of this document.

### 9.2 Fixed Key Encryption

The encryption used with this document assumes a fixed key is to be used. The same key is provided to both the transmitter and the receiver. The method of delivering the key to all parties is unspecified. This document allows for up to 256 different keys to be available for decryption. The cw_index field is used to determine which key should be used when decrypting a section. The length of the fixed key is dependent on the type of algorithm being used. It is assumed that fixed key delivered to all parties will be the correct length for the algorithm that is intended to be used.

### 9.3 Encryption Algorithms

The encryption_algorithm field of the splice_info_section is a six-bit value, which may contain one of the values shown in Table 9-1. All Data Encryption Standard variants use a 64-bit key (actually 56 bits plus a checksum) to encrypt or decrypt a block of 8 bytes. In the case of triple DES, there will need to be 3 64-bit keys, one for each of the three passes of the DES algorithm. The "standard" triple DES actually uses two keys, where the first and third keys are identical. See FIPS PUB 46-3 and FIPS PUB 81.

**Table 9-1. Encryption Algorithm**

| **Value** | **Encryption Algorithm** |
|---|---|
| 0 | No encryption |
| 1 | DES - ECB mode |
| 2 | DES - CBC mode |
| 3 | Triple DES EDE3 - ECB mode |
| 4-31 | Reserved |
| 32-63 | User private |

### 9.3.1 DES - ECB mode

This algorithm uses the "Data Encryption Standard", (see FIPS PUB 81), in the electronic codebook mode.

In order to use this type of encryption, the encrypted data must contain a multiple of 8 bytes of data, from splice_command_type through to E_CRC_32 fields. The alignment_stuffing loop may be used to pad any extra bytes that may be required.

### 9.3.2 DES - CBC mode

This algorithm uses the "Data Encryption Standard", (see FIPS PUB 81) in the cipher block chaining mode. The basic algorithm is identical to DES ECB. Each 64-bit plaintext block is bitwise exclusive-ORed with the previous ciphertext block before being encrypted with the DES key. The first block is exclusive-ORed with an initial vector. For the purposes of this document, the initial vector shall have a fixed value of zero.

In order to use this type of encryption, the encrypted data must contain a multiple of 8 bytes of data, from splice_command_type through to E_CRC_32 fields. The alignment_stuffing loop may be used to pad any extra bytes that may be required.

### 9.3.3 Triple DES EDE3 - ECB mode

This algorithm uses three 64-bit keys, each key being used on one pass of the DES-ECB algorithm. See FIPS PUB 46-3. Every block of data at the transmit device is first encrypted with the first key, decrypted with the second key, and finally encrypted with the third key. Every block at the receive site is first decrypted with the third key, encrypted with the second key, and finally decrypted with the first key.

In order to use this type of encryption, the encrypted data must contain a multiple of 8 bytes of data, from splice_command_type through to E_CRC_32 fields. The alignment_stuffing loop may be used to pad any extra bytes that may be required.

### 9.3.4 User Private Algorithms

This document allows for the use of private encryption algorithms. It is not specified how the transmit and receive devices agree on the algorithm to use for any user private code. It is also not specified as to how coordination of private values for the encryption_algorithm field should be registered or administered.

## Claims

1. A method of receiving and playing back content at a user unit, said method comprising:
receiving at said user unit a transmission stream, said transmission stream comprising: (a) a content item; (b) a preceding interstitial content set, said preceding interstitial content set comprising one or more preceding interstitial content items, said preceding interstitial content set being received before said content item; and (c) preceding interstitial signalling data, wherein said preceding interstitial signalling data are received: in advance of receiving said preceding interstitial content set; repeatedly throughout said preceding interstitial content set; and one or more times during receiving of said content item;
making a recording at said user unit by storing: a portion of said preceding interstitial content set; said content item, wherein said recording starts at a recording start point during reception of said preceding interstitial content set;
storing said recording with said preceding interstitial signalling data;
receiving at said user unit one or more substitution interstitial content items;
computing the start time of said content item using said preceding interstitial signalling data;
playing back one or more substitution interstitial content items from said one or more substitution interstitial content items received at said user unit; and
subsequently starting playing back said recording from said computed content item start time.

2. The method of claim 1, wherein said preceding interstitial signalling data comprise the end time of said preceding interstitial content set which is set as said start time of said content item during said computing.

3. The method of claim 1, wherein said preceding interstitial signalling data comprise the start time of said preceding interstitial content set and the duration of said preceding interstitial content set, and said computing comprises adding said start time of said interstitial content set to the duration of said preceding interstitial content set to obtain said start time of said content item.

4. The method of any preceding claim, wherein said played back one or more substitution interstitial content items correspond to interstitial content items comprised in said portion of said preceding interstitial content set.

5. The method of any of claims 1 to 3, wherein said played back one or more substitution interstitial content items correspond to said one or more preceding interstitial content items.

6. The method of any preceding claim, wherein said transmission stream further comprises: (d) a following interstitial content set, said following interstitial content set comprising one or more following interstitial content items, said following interstitial content set being received after said content item; and (e) a following start time indicating the following start point of said following interstitial content set, wherein said following start time is received in advance of said following interstitial content set and repeatedly throughout said following interstitial content set, and wherein said making a recording further comprises storing a portion of said following interstitial content set, wherein said recording ends at a recording end point during reception of said following interstitial content set, said method further comprising:
storing said following start time with said recording;
determining the end time of said content item by extracting said following start time and designating said following start time as said end time of said content item; and
stopping playing back said recording at said determined content item end time.

7. The method of claim 6, further comprising subsequently playing back one or more further substitution interstitial content items from said one or more substitution interstitial content items received at said user unit.

8. The method of claim 7, wherein said played back one or more further substitution interstitial content items correspond to following interstitial content items comprised in said portion of said following interstitial content set.

9. The method of claim 7, wherein said played back one or more further substitution interstitial content items correspond to said following interstitial content items in said following interstitial content set.

## Patentansprüche

1. Verfahren zum Empfangen und Wiedergeben von Inhalt in einem Benutzergerät, wobei das Verfahren umfasst:
Empfangen eines Übertragungsstroms in dem Benutzergerät, wobei der Übertragungsstrom umfasst: (a) eine Inhaltseinheit; (b) einen vorausgehenden Einblendungsinhaltsblock, wobei der vorausgehende Einblendungsinhaltsblock ein oder mehrere vorausgehende Einblendungsinhaltseinheiten umfasst, wobei der vorausgehende Einblendungsinhaltsblock vor der Inhaltseinheit empfangen wird; und (c) vorausgehende Einblendungssignalisierungsdaten, wobei die vorausgehenden Einblendungssignalisierungsdaten wie folgt empfangen werden: vor Empfang des vorausgehenden Einblendungsinhaltsblocks; wiederholt in dem gesamten vorausgehenden Einblendungsinhaltsblock; und ein- oder mehrmalig während des Empfangs der Inhaltseinheit;
Durchführen einer Aufzeichnung in dem Benutzergerät durch Speichern: eines Abschnitts des vorausgehenden Einblendungsinhaltsblocks; der Inhaltseinheit, wobei die Aufzeichnung an einem Aufzeichnungsstartpunkt während des Empfangs des vorausgehenden Einblendungsinhaltblocks beginnt;
Speichern der Aufzeichnung mit den vorausgehenden Einblendungssignalisierungsdaten;
Empfangen einer oder mehrerer Ersatzeinblendungsinhaltseinheiten in dem Benutzergerät;
Berechnen der Startzeit der Inhaltseinheit unter Verwendung der vorausgehenden Einblendungssignalisierungsdaten;
Wiedergeben einer oder mehrerer Ersatzeinblendungsinhaltseinheiten aus der einen oder den mehreren in dem Benutzergerät empfangenen Ersatzeinblendungsinhaltseinheiten; und
Anschließendes Beginnen der Wiedergabe der Aufzeichnung ab der berechneten Inhaltseinheitsstartzeit.

2. Verfahren nach Anspruch 1, wobei die vorausgehenden Einblendungssignalisierungsdaten die Beendigungszeit des vorausgehenden Einblendungsinhaltblocks umfassen, die während der Berechnung als die Startzeit der Inhaltseinheit eingestellt wird.

3. Verfahren nach Anspruch 1, wobei die vorausgehenden Einblendungssignalisierungsdaten die Startzeit des vorausgehenden Einblendungsinhaltsblocks und die Dauer des vorausgehenden Einblendungsinhaltsblocks umfassen und die Berechnung umfasst: Addieren der Startzeit des Einblendungsinhaltsblocks zur Dauer des vorausgehenden Einblendungsinhaltsblocks, um die Startzeit der Inhaltseinheit zu erhalten.

4. Verfahren nach einem vorhergehenden Ansprüche, wobei die eine oder die mehreren wiedergegebenen Ersatzeinblendungsinhaltseinheiten Einblendungsinhaltseinheiten entsprechen, die in dem Abschnitt des vorausgehenden Einblendungsinhaltsblocks enthalten sind.

5. Verfahren nach einem der Ansprüche 1 bis 3, wobei die eine oder die mehreren wiedergegebenen Ersatzeinblendungsinhaltseinheiten der einen oder den mehreren vorausgehenden Einblendungsinhaltseinheiten entsprechen.

6. Verfahren nach einem vorhergehenden Anspruch, wobei der Übertragungsstrom ferner umfasst: (d) einen nachfolgenden Einblendungsinhaltsblock, wobei der nachfolgende Einblendungsinhaltsblock eine oder mehrere nachfolgende Einblendungsinhaltseinheiten umfasst, wobei der nachfolgende Einblendungsinhaltblock nach der Inhaltseinheit empfangen wird; und (e) eine nachfolgende Startzeit, die den nachfolgenden Startpunkt des nachfolgenden Einblendungsinhaltsblocks angibt, wobei die nachfolgende Startzeit vor dem nachfolgenden Einblendungsinhaltsblock und wiederholt im gesamten nachfolgenden Einblendungsinhaltsblock empfangen wird, und wobei die Durchführung einer Aufzeichnung ferner das Speichern eines Abschnitts des nachfolgenden Einblendungsinhaltsblocks umfasst, wobei die Aufzeichnung während des Empfangs des nachfolgenden Einblendungsinhaltsblocks an einem Aufzeichnungsendpunkt endet, wobei das Verfahren ferner umfasst:
Speichern der nachfolgenden Startzeit mit der Aufzeichnung;
Bestimmen der Beendigungszeit der Inhaltseinheit durch Extrahieren der nachfolgenden Startzeit und Angeben der nachfolgenden Startzeit als die Beendigungszeit der Inhaltseinheit; und
Beenden der Wiedergabe der Aufzeichnung zu der bestimmten Inhaltseinheitsbeendigungszeit.

7. Verfahren nach Anspruch 6, ferner umfassend: anschließendes Wiedergeben einer oder mehrerer weiterer Ersatzeinblendungsinhaltseinheiten aus der einen oder den mehreren in dem Benutzergerät empfangenen Ersatzeinblendungsinhaltseinheiten.

8. Verfahren nach Anspruch 7, wobei die Wiedergabe eines oder mehrerer weiterer Ersatzeinblendungsinhaltseinheiten nachfolgenden Einblendungsinhaltseinheiten, die in dem Abschnitt des nachfolgenden Einblendungsinhaltsblocks enthalten sind, entsprechen.

9. Verfahren nach Anspruch 7, wobei die Wiedergabe eines oder mehrerer weiterer Ersatzeinblendungsinhaltseinheiten den nachfolgenden Einblendungsinhaltseinheiten in dem nachfolgenden Einblendungsinhaltsblock entsprechen.

## Revendications

1. Procédé de réception et de lecture de contenu au niveau d'une unité d'utilisateur, ledit procédé comprenant les étapes consistant à :
recevoir un flux d'émission au niveau de ladite unité d'utilisateur, ledit flux d'émission comprenant : (a) un item de contenu ; (b) un jeu de contenu interstitiel précédent, ledit jeu de contenu interstitiel précédent comprenant un ou plusieurs item(s) de contenu interstitiel(s) précédent(s), ledit jeu de contenu interstitiel précédent étant reçu avant ledit item de contenu ; et (c) des données de signalement interstitielles précédentes, lesdites données de signalement interstitielles précédentes étant reçues : en avance par rapport à une réception dudit jeu de contenu interstitiel précédent ; de manière répétée tout au long dudit jeu de contenu interstitiel précédent ; et une ou plusieurs fois pendant une réception dudit item de contenu ;
réaliser un enregistrement au niveau de ladite unité d'utilisateur en stockant : une partie dudit jeu de contenu interstitiel précédent ; ledit item de contenu, ladite étape d'enregistrement commençant au niveau d'un point de début d'enregistrement pendant une réception dudit jeu de contenu interstitiel précédent ;
stocker ledit enregistrement avec lesdites données de signalement interstitielles précédentes ;
recevoir au niveau de ladite unité d'utilisateur un ou plusieurs item(s) de contenu interstitiel(s) de substitution ;
calculer le temps de début dudit item de contenu en utilisant lesdites données de signalement interstitielles précédentes ;
lire un ou plusieurs item(s) de contenu interstitiel(s) de substitution à partir desdits un ou plusieurs item(s) de contenu interstitiel(s) de substitution reçus au niveau de ladite unité d'utilisateur ; et
commencer ensuite à lire ledit enregistrement à partir dudit temps de début d'item de contenu calculé.

2. Procédé selon la revendication 1, dans lequel lesdites données de signalement interstitielles précédentes comprennent le temps de fin dudit jeu de contenu interstitiel précédent qui est défini comme étant ledit temps de début dudit item de contenu pendant ledit calcul.

3. Procédé selon la revendication 1, dans lequel lesdites données de signalement interstitielles précédentes comprennent le temps de début dudit jeu de contenu interstitiel précédent et la durée dudit jeu de contenu interstitiel précédent, et ladite étape de calcul comprend une étape consistant à ajouter ledit temps de début dudit jeu de contenu interstitiel à la durée dudit jeu de contenu interstitiel précédent afin obtenir ledit temps de début dudit item de contenu.

4. Procédé selon l'une quelconque des revendications précédentes, dans lequel ledit ou lesdits un ou plusieurs item(s) de contenu interstitiel(s) de substitution lu(s) correspond(ent) à des items de contenu interstitiels compris dans ladite partie dudit jeu de contenu interstitiel précédent.

5. Procédé selon l'une quelconque des revendications 1 à 3, dans lequel ledit ou lesdits un ou plusieurs item(s) de contenu interstitiel(s) de substitution lu(s) correspond(ent) audit ou auxdits un ou plusieurs item(s) de contenu interstitiel(s) précédent(s).

6. Procédé selon l'une quelconque des revendications précédentes, dans lequel ledit flux de transmission comprend en outre : (d) un jeu de contenu interstitiel suivant, ledit jeu de contenu interstitiel suivant comprenant un ou plusieurs item(s) de contenu interstitiel(s) suivant(s), ledit jeu de contenu interstitiel suivant étant reçu après ledit item de contenu ; et (e) un temps de début suivant indiquant le point de début suivant dudit jeu de contenu interstitiel suivant, ledit temps de début suivant étant reçu en avance par rapport audit jeu de contenu interstitiel suivant et de manière répétée tout au long dudit jeu de contenu interstitiel suivant, et dans lequel ladite étape de réalisation d'un enregistrement comprend en outre une étape consistant à stocker une partie dudit jeu de contenu interstitiel suivant, ledit enregistrement se terminant au niveau d'un point de fin d'enregistrement pendant une réception dudit jeu de contenu interstitiel suivant, ledit procédé comprenant en outre les étapes consistant à :
stocker ledit temps de début suivant avec ledit enregistrement ;
déterminer le temps de fin dudit item de contenu grâce aux étapes consistant à extraire ledit temps de début suivant et à désigner ledit temps de début suivant comme étant ledit temps de fin dudit item de contenu ; et
stopper une lecture dudit enregistrement au niveau dudit temps de fin d'item de contenu déterminé.

7. Procédé selon la revendication 6, comprenant en outre une étape consistant à lire ensuite un ou plusieurs autre(s) item(s) de contenu interstitiel(s) de substitution à partir dudit ou desdits un ou plusieurs item(s) de contenu interstitiel(s) de substitution reçu(s) au niveau de ladite unité d'utilisateur.

8. Procédé selon la revendication 7, dans lequel ledit ou lesdits un ou plusieurs autre(s) item(s) de contenu interstitiel(s) de substitution lu(s) correspond(ent) à des items de contenu interstitiels suivants compris dans ladite partie dudit jeu de contenu interstitiel suivant.

9. Procédé selon la revendication 7, dans lequel ledit ou lesdits un ou plusieurs autre(s) item(s) de contenu interstitiel(s) de substitution lu(s) correspond(ent) auxdits items de contenu interstitiels suivants dans ledit jeu de contenu interstitiel suivant.
